# EUROPÄISCHE PATENTSCHRIFT

(11) **EP 0 210 951 B1**
(45) Veröffentlichungstag und Bekanntmachung des Hinweises auf die Patenterteilung: **07.03.1990**
(21) Anmeldenummer: 86810299.7
(22) Anmeldetag: 07.07.1986
(51) Int. Cl.: C09B 62/503, C07C 315/04, C07F 9/547, C07D 295/18, C07F 9/09, D06P 1/384

(54) **Reaktivfarbstoffe, deren Herstellung und Verwendung**
Reactive dyes, their preparation and their use
Colorants réactifs, leur préparation et leur utilisation

(30) Priorität: 12.07.1985 CH 3038/85
(43) Veröffentlichungstag der Anmeldung: 04.02.1987
(73) Patentinhaber: CIBA-GEIGY AG, 4002 Basel (CH)
(72) Erfinder: Tzikas, Athanassios, Dr., CH-4133 Pratteln (CH); Aeschlimann, Peter, CH-4123 Allschwil (CH)

(56) Entgegenhaltungen:
- EP-A- 0 144 766
- EP-A- 0 172 789
- FR-A- 1 370 455
- FR-A- 1 431 320

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen faserreaktiven Farbstoffen die gestellte Aufgabe gelöst wird.

Gegenstand der Erfindung sind Reaktivfarbstoffe der Formel 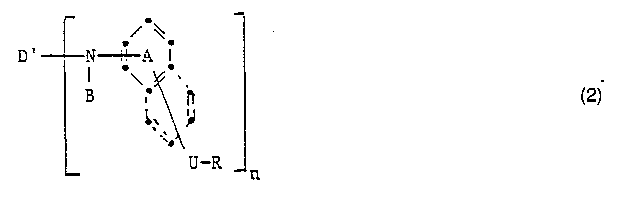 worin D' der Rest eines Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes ;

U -CO ; R ein Rest der Formel 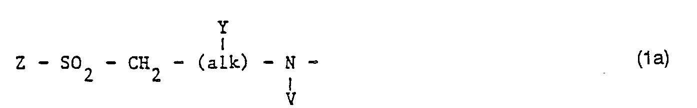 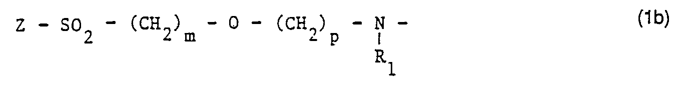 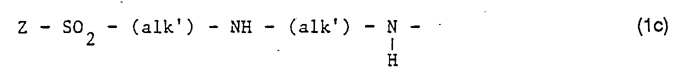 oder

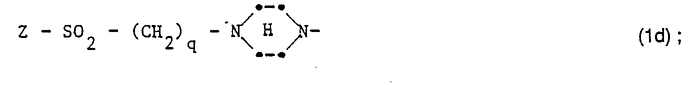

Z Sulfatoäthyl-, ß-Thiosulfatoäthyl, ß-Phosphatoäthyl, ß-Acetoxyäthyl, ß-Halogenäthyl oder Vinyl ; alk ein Polymethylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest -S0₂-Z, worin Z die oben angegebene Bedeutung hat; V Wasserstoff oder ein Alkylrest mit 1 bis 4 C-Atomen, der durch Carboxy, Sulfo, Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsul- famoyl, Methylsulfonyl, Aethylsulfonyl und Propylsulfonyl, Alkoxygruppen- mit 1 oder 2 C-Atomen, Halogen oder Hydroxy substituiert sein kann ; oder ein Rest - 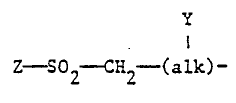 worin Z, alk und Y die angegebenen Bedeutungen haben; R₁ Wasserstoff oder C₁₋₆-Alkyl; alk' unabhängig voneinander Polymethylenreste mit 2 bis 6 C-Atomen oder deren verzweigte Isomere ; n = 1 bis 4, m = 1 bis 6, p = 1 bis 6 und q = 1 bis 6 ; und B Wasserstoff oder Alkyl mit 1 bis 4 Kohlenstoffatomen, das durch Carboxy, Sulfo, Cyan oder Hydroxy substituiert sein kann, ist; und der Benzol- bzw. Naphthalinrest A weitere Substituenten enthalten kann.

Der Rest D' in Formel (2) kann an seinem Grundgerüst die bei organischen Farbstoffen üblichen Substituenten gebunden enthalten.

Als Beispiele für weitere Substituenten im Rest D' seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-ß-hydroxyäthylamino, N,N-Di-ß-sulfatoäthylamino, Sulfobenzylamino, N,N-Disulfoben- zylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(ß-hydroxyäthyl)-sulfamoyl, N,N-Di-(ß-hydroxyäthyl)-sulfamoyl, N-Phenylsulfamoyl, Ureido, Hydroxy, Carboxy, Sulfomethyl oder Sulfo. Vorzugsweise enthält der Rest D' eine oder mehrere Sulfonsäuregruppen. Weitere Substituenten am Rest D' sind insbesondere Methyl, Aethyl, Methoxy, Aethoxy, Acetylamino, Benzoylamino, Amino, Chlor, Brom, Ureido, Hydroxy, Carboxy, Sulfomethyl oder Sulfo.

Als ß-Halogenäthyl kommt für Z insbesondere der ß-Chloräthylrest in Betracht. Der Polymethylenrest alk ist vorzugsweise Methylen, Aethylen, Methylmethylen, Propylen oder Butylen. Der Substituent Y ist als Acyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert.-Butyl sein. Derivate der Carboxy-oder Sulfogruppe sind z. B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest R₁ ist beispielsweise Methyl, Aethyl, Propyl, Isopropyl, Butyl, Isobutyl, sec.-Butyl, tert.-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4. Der Index n ist vorzugsweise 1 oder 2, insbesondere, wenn D ein Phthalocyaninrest ist, aber auch 3 oder 4.

Ferner sind in Betracht zu ziehen, Reaktivfarbstoffe der Formel (2), worin der Rest D' noch einen weiteren Reaktivrest einschliesst. Die zusätzlichen, in D' eingeschlossenen Reaktivreste können über Aminogruppen oder in anderer Weise, z. B. durch eine direkte Bindung an D' gebunden sein.

Der Rest B ist, falls es sich um einen Alkylrest handelt, geradkettig oder verzweigt; er kann weitersubstituiert sein, z. B. durch Halogen, Hydroxy, Cyan, C₁₋₄-Alkoxy, Carboxy oder Sulfo. Als Beispiele für B seien die folgenden Reste genannt : Methyl, Aethyl, Propyl, Isopropyl, Butyl, Isobutyl, sec.-Butyl, tert.-Butyl, Carboxymethyl, ß-Carboxyäthyl, ß-Carboxypropyl, Methoxycarbonylmethyl, Aethoxycarbonylmethyl, β-Methoxyäthyl, β-Aethoxyäthyl, β-Methoxypropyl, ß-Chloräthyl, y-Brompropyl, β-Hydroxyäthyl, β-Hydroxybutyl, β-Cyanäthyl, Sulfomethyl und β-Sulfoäthyl. Vorzugsweise ist B Wasserstoff, Methyl oder Aethyl. Als weitere Substituenten am Benzol- bzw. Naphthalinrest A kommen die gleichen in Betracht, die weiter oben bei der Erläuterung des Restes D' genannt sind.

Bevorzugt sind insbesondere Reaktivfarbstoffe der Formel 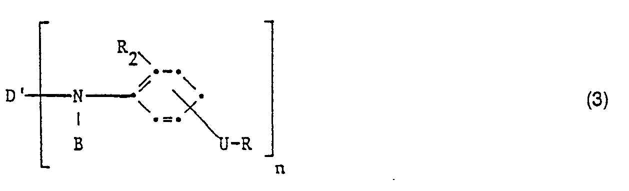 worin R₂ Wasserstoff, C₁₋₄-Alkyl, C₁.₄-Alkoxy, Halogen, Hydroxy, Carboxy oder Sulfo ist; und D', B, U, R und n die unter Formel (2) angegebenen Bedeutungen haben.

Bevorzugt sind ferner Reaktivfarbstoffe der Formel (2) oder (3), worin D' der Rest eines Anthrachinonfarbstoffes ist.

Insbesondere kommen Reaktivfarbstoffe der Formel (2) oder (3) in Betracht, worin D' der Rest eines Anthrachinonfarbstoffes der Formel 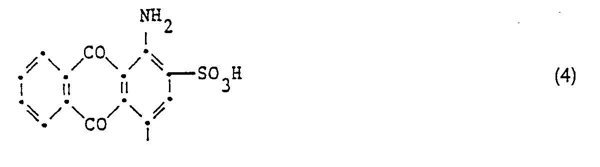 ist, wobei der Anthrachinonkern durch eine weitere Sulfogruppe substituiert sein kann.

Weiterhin bevorzugt sind Reaktivfarbstoffe der Formel (2) oder (3), worin D' der Rest eines Phthalocyaninfarbstoffes ist.

Als solche kommen vor allem Reaktivfarbstoffe der Formel (3) in Betracht, worin D' der Rest eines Phthalocyaninfarbstoffes der Formel

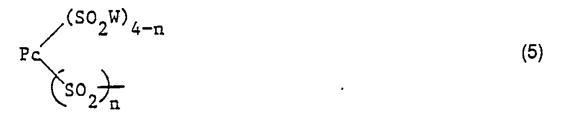

Pc der Rest eines Kupfer- oder Nickelphthalocyanins ; W ―OH und/oder ―NR³R₄ ; R₃ und R₄ unabhängig voneinander Wasserstoff oder Alkyl mit 1 bis 4 Kohlenstoffatomen, das durch Hydroxy, Alkoxy, Hydroxyalkoxy, Sulfo, Sulfato, oder Sulfatoalkoxy substituiert sein kann, oder worin -NR₃R₄ einen Morpholinorest bildet ; und n die für Formel (3) geltende Bedeutung hat.

Bevorzugt sind insbesondere Verbindungen der Formeln (2) und (3), worin Z die β-Sulfatoäthyl-, ß-Chloräthyl- oder Vinylgruppe ist.

Der in eckige Klammern eingeschlossene Teil von Formel (2) oder (3) ist ein Reaktivrest, welcher einbis viermal im Molekül vorhanden sein kann ;

Die Reaktivreste können gleich oder verschieden sein ; vorzugsweise sind die Reste gleich. Der Reaktivrest enthält einen Substituenten, der eine faserreaktive Abgangsgruppe ist, bzw. enthält, z. B. wenn Z ß-Chloräthyl ist, oder die nach Art von faserreaktiven Abgangsgruppen wirksam werden können, z. B. falls Z Vinyl ist. Unter faserreaktiven Verbindungen sind solche zu verstehen, die mit den Hydroxygruppen der Cellulose, den Amino-, Carboxy-, Hydroxy und Thiolgruppen bei Wolle und Seide, oder mit den Amino- und evt. Carboxygruppen von synthetischen Polyamiden unter Bildung kovalenter chemischer Bindung zu reagieren vermögen.

Ein Verfahren zur Herstellung von Reaktivfarbstoffen der Formel (2) ist dadurch gekennzeichnet, dass man einen Farbstoff der Formel 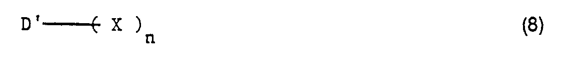 worin X ein Halogenatom ist, mit einem Amin der Formel 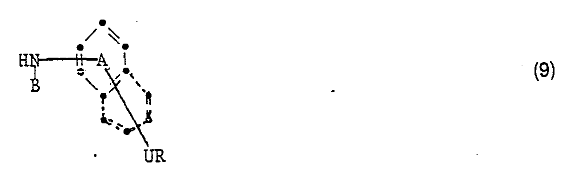 worin B Wasserstoff oder Alkyl mit 1 bis 4 Kohlenstoffatomen, das durch Carboxy, Sulfo, Cyan oder Hydroxy substituiert sein kann, ist; und der Benzol- bzw. Naphthalinrest A weitere Substituenten enthalten kann ; kondensiert. Die Symbole D', n, U und R haben die unter Formel (2) angegebenen Bedeutungen.

Eine abgewandelte Ausführungsform des Verfahrens besteht - darin, zunächst einen Farbstoff herzustellen,- der eine Vorstufe des Reaktivrestes enthält und diese nachträglich in die Endstufe umzuwandeln, z. B. durch Veresterung oder eine Additionsreaktion. Beispielsweise kann man einen Farbstoff, worin Z ein Rest HO―CH₂CH₂―SO₂― ist, herstellen und das Zwischenprodukt vor oder nach der Acylierung mit Schwefelsäure umsetzen, so dass die Hydroxygruppe in die Sulfatogruppe überführt wird ; oder man verwendet einen analogen Farbstoff, worin Z die Gruppe H₂C=CH-S0₂- ist, und lagert an das Zwischenprodukt Thioschwefelsäure an, wobei ein Rest HO₃SS―CH₂CH₂―SO₂ entsteht. Die Sulfatierung der Hydroxygruppe in einem Farbstoff der Formel (2) oder einem geeigneten Vorprodukt, erfolgt z. B. durch Umsetzung mit konzentrierter Schwefelsäure bei 0 °C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80 °C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (2) oder ein Zwischenprodukt anstelle eines Halogenatoms oder der Sulfatogruppe, beispielsweise einer Thiosulfon- oder Phosphatogruppe erfolgt in an sich bekannter Weise.

Ausserdem können Eliminierungsreaktionen an die Synthese angeschlossen werden. Beispielsweise kann man Reaktivfarbstoffe der Formel (2), welche Sulfatoäthylsulfonylreste enthalten, mit halogenwasserstoffspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (2), worin D' der Rest eines aus zwei oder mehr als zwei Komponenten zusammengesetzten Farbstoffes ist, beispielsweise eines Anthrachinonfarbstoffes der Bromaminsäure-Reihe, eines Kupfer- oder Nickel-phthalocyanins, oder eines Kupferformazanes. Grundsätzlich lassen sich die Reaktivfarbstoffe der Formel (2) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (2) enthalten, ausgeht, oder diese faserreaktiven Reste in hierfür geeignete Zwischenprodukte mit Farbstoffcharakter einführt.

Das bevorzugte Verfahren zur Herstellung der Reaktivfarbstoffe der Formel (3) ist dadurch gekennzeichnet, dass man einen Farbstoff der Formel (8) mit einem Amin der Formel 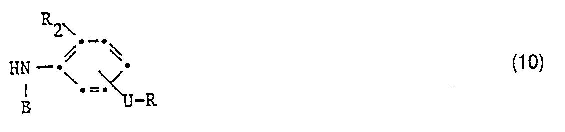 zu einem Reaktivfarbstoff der Formel (3) kondensiert. Die Reste B, U, R und R₂ haben die unter Formel (3) angegebenen Bedeutungen.

Als Amine der Formel (10) können beispielsweise genannt werden :
3-Aminobenzoesäure=N'-ß-(ß'-chloräthylsulfonyl)-äthylamid,
4-Chlor-3-aminobenzoesäure-N'-_{ß}-(_{ß}'-chloräthylsulfonyl)-äthylamid,
4-Methyl-3-aminobenzoesäure-N'-ß-(ß'-chloräthylsulfonyl)-äthylamid,
4-Methoxy-3-aminobenzoesäure-N'-ß-(ß'-chloräthylsulfonyl)-äthylamid,
3-Aminobenzoesäure-N'-_{ß}-[_{ß}'-(_{ß}"-chloräthylsulfonyl)-äthyloxy]-äthylamid,
3-Aminobenzoesäure-N'-γ-(β'-chloräthylsulfonyl)-propylamid,
3-Aminobenzoesäure-N'-bis-[ß-(_{ß}'-chloräthylsulfonyl)-äthyl]-amid,
3-Aminobenzoesäure-N'-bis-[y-(ß'-chloräthylsulfonyl)-propyl]-amid,
3-N-Aethylaminobenzoesäure-N'-ß(ß'-chloräthylsulfonyl)-äthylamid,
3-N-Isopropylaminobenzoesäure-N'-ß-(ß'-chloräthylsulfonyl)-äthylamid,
3-N-Isopropylaminobenzoesäure-N'-γ-(β'-chloräthylsulfonyl)-propylamid,
4-Aminobenzoesäure-N'-ß-(ß'-chloräthylsulfonyl)-äthylamid,
4-Aminobenzoesäure-N'-β=[β'-(β"-chloräthylsulfonyl)-äthyloxy]-äthylamid,
4-Aminobenzoesäure-N'-y-(ß'-chloräthylsulfonyl)-propylamid,
4-Aminobenzoesäure-N'-bis-[ß-(ß'-chloräthylsulfonyl)-äthyl]-amid,
4-Aminobenzoesäure-N'-bis-[γ-(β'-chloräthylsulfonyl)-propyl]-amid,
4-N-Aethylaminobenzoesäure-N'-ß-(ß'-chloräthylsulfonyl)-äthylamid,
4-N-Isopropylaminobenzoesäure-N'-γ-(β-chloräthylsulfonyl)-propylamid,
4-Aminobenzoesäure-N'-ß-(vinylsulfonyl)-äthylamid,
4-Aminobenzoesäure-N'-bis-[ß-(vinylsulfonyl)-äthyl]-amid,
4-Aminobenzoesäure-N'-δ-(β'-chloräthylsulfonyl)-butylamid,
4-Chlor-3-aminobenzoesäure-N'-bis-[ß-(ß'-chloräthylsulfonyl)-äthyl]-amid,
4-Methyl-3-aminobenzoesäure-N'-bis-[ß-(ß'-chloräthylsulfonyl)-äthyl]-amid,
4-Methoxy-3-aminobenzoesäure-N'-bis-[y-(ß'-chloräthylsulfonyl)-propyl]-amid,
3-Aminobenzoesäure-N'-8-(ß'-Chtoräthylsulfonyl)-butylamid,
3-Aminobenzoesäure-N'-ß-[ß'-(ß"-chloräthylsulfonyl)-äthyloxy]-äthylamid, .
4-Hydroxy-3-aminobenzoesäure-N'-_{ß}-(ß'-chloräthylsulfonyl)-äthylamid,
4-Hydroxy-3-aminobenzoesäure-N'-bis-[ß-(ß'-chloräthylsulfonyl)-äthyl]-amid,

4-Methoxy-3-aminobenzoesäure-N'-bis-[ß-(ß'-chloräthylsulfonyl)-äthyl]-amid, sowie entsprechende Verbindungen, worin die ß-Chloräthylsulfonyl-Gruppe durch ß-Sulfatoäthylsulfonyl oder Vinylsulfonyl ersetzt ist ; weiterhin kommen in Betracht :
4-Amino-3-sulfobenzoesäure-N'-ß-(ß'-chloräthylsulfonyl)-äthylamid,
4-Amino-3-sulfobenzoesäure-N'-ß-(ß'-sulfatoäthylsulfonyl)-äthylamid,
4-Amino-3-sulfobenzoesäure-N'-β-vinylsulfonyl-äthylamid,
3-Amino-2-sulfobenzoesäure-N'-ß-vinylsulfonyl-äthylamid,
3-Amino-4-methoxybenzoesäure-N'-_{ß}-(ß'-sulfatoäthylsulfonyl)-äthylamid,
4-Amino-3-sulfobenzoesäure-N'-bis-(ß-vinylsulfonyl-äthyl)-amid,
3-Amino-4-methoxybenzoesäure-N'-bis-[ß-(ß'-sulfatoäthylsulfonyl)-äthyl]-amid,
3-Amino-2-sulfobenzoesäure-N'-bis-(ß-vinylsulfonyl-äthyl)-amid,
3-Amino-4-methoxybenzoesäure-N'-(y-vinylsulfonyl-propyl) piperazid,
4-Amino-3-methoxybenzoesäure-N'-bis-(ß-vinylsulfonyl-äthyl)-amid,
3-Aminobenzoesäure-N'-ß-(ß'-vinylsulfonyl-äthylamino)-äthylamid,
3-Amino-4-methylbenzoesäure-N'-(ß-vinylsulfonyl-äthyl)-piperazid,
4-Amino-3-sulfobenzoesäure-N'-bis-[β-(β'-sulfatoäthylsulfonyl)-äthyl]-amid,
3-Amino,4-methoxybenzoesäure-N'-bis-(ß-vinylsuifonyl-äthyl)-amid,
3-Amino-4-methoxybenzoesäure-N'-(ß-vinylsulfonyl-äthyl)-amid,
4-Amino-3-sulfobenzoesäure-N'-(γ-vinylsulfonyl-propyl)-piperazid,
4-Amino-3-sulfobenzoesäure-N'-ß(ß'-vinylsulfonyl-äthylamino)-äthylamid,
3-Amino-4-methylbenzoesäure-N'-ß-(ß'-sulfatoäthylsulfonyl)-äthyl-amid,
4-Amino-3-sulfobenzoesäure-N'-bis-[ß-(ß'-chloräthylsulfonyl)-äthyl]-amid,
4-Amino-3-sulfobenzoesäure-N'-(ß-vinylsulfonyl-äthyl)-piperazid,
4-Amino-3-sulfobenzoesäure-N'-ß-(ß'-vinylsulfanyl-äthylamino)-äthylamid,
5-Amino-1,3-benzoldicarbonsäure-N',N"-(ß-vinylsulfonyl-äthyl)-diamid,
4-Amino-3-sulfobenzoesäure-N'-ß-(ß'-vinylsulfonyl-äthyloxy)-äthylamid.

Die Kondensationen der Farbstoffe der Formel (8) mit den Aminen der Formeln (9) oder (10) erfolgen vorzugsweise in wässriger Lösung oder Suspension bei niedrigen Temperaturen, und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder - bicarbonate neutralisiert. Als Amine der Formeln (9) und (10) setzt man die freien Amine oder deren Salze, bevorzugt in Form des Hydrochlorids, ein. Die Umsetzung wird bei Temperaturen etwa zwischen 0 und 40 °C, bevorzugt zwischen 5 und 25 °C, unter Zusatz säurebindender Mittel, bevorzugt Natriumcarbonat, in einem pH-Bereich von 2 bis 8, bevorzugt 5 bis 6,5, durchgeführt.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Wichtige Farbstoffe der Formel (2) sind ausser den bereits genannten, die einen Rest D' der Formeln (4) und (5) enthalten, z. B. 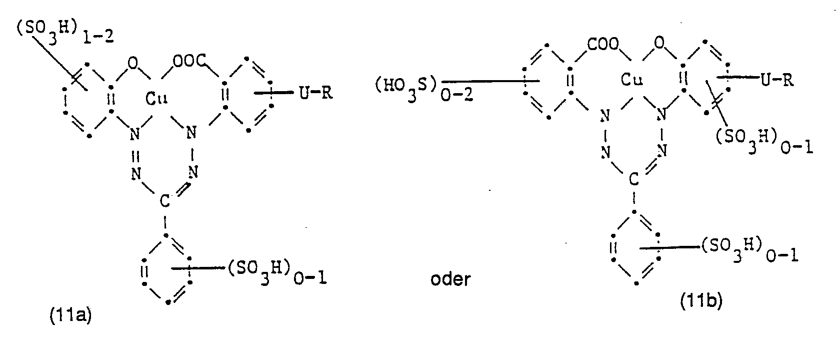 worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können ; 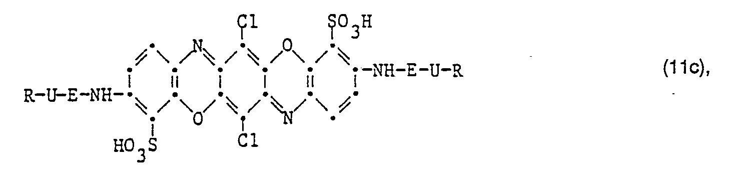 worin E ein Phenylenrest, der durch Alkyl mit 1 bis 4 C-Atomen, Halogen, Carboxy oder Sulfo substituiert sein kann ; oder ein Alkylenrest mit 2 bis 6 C-Atomen ist; und die äusseren Benzolringe in Formel (11 c) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

Ein gegebenenfalls in D' eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder ein abspaltbare Gruppe substituierter Alkenoyl- oder Alkensulfonylrest, ein über eine Carbonyl- oder Sulfonylgruppe ; durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder ein abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin-oder Halogenpyrimidinrest oder ein aliphatischer Acylrest, wie ein Halogenacetyl- oder Halogenpropionylrest.

Ein weiterer Gegenstand der Erfindung betrifft die Verwendung von Verbindungen der Formel 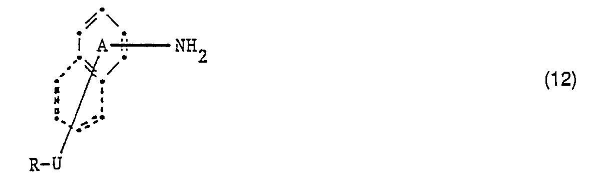 worin U, R und A die unter Formel (2) angegebenen Bedeutungen haben, für die Synthese von faserreaktiven Anthrachinon-, Phthalocyanin-, Formazan-, Azomethin-, Dioxazin-, Phenazin-, Stilben-, Triphenylmethan-, Xanthen-, Thioxanthon-, Nitroaryl-, Pyrenchinon- oder Perylentetracarbimid-Farbstoffen.

Die Verbindungen der Formel (12) können hergestellt werden, indem man die entsprechenden Aminobenzoesäure- oder Aminonaphthoesäurechloride mit Aminen, welche den Resten der Formel (1a) bis (1d) entsprechen, kondensiert ; oder man geht von einem Nitrobenzoyl- oder Nitronaphthoylchlorid aus, kondensiert mit dem Amin, und reduziert die Nitrogruppe zur Aminogruppe. Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50 °C und 180°C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanoi und Natriumalkohotat in Alkohol erwärmt. Die Thioätherverbindungen werden dann noch zu den entsprechenden Sulfonen oxidiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide, in denen die Gruppierung ―SO₂―Z eine ß-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte überführt werden, in denen die Gruppierung ―SO₂―Z die Gruppierung ―SO₂―CH₂―CH₂―O―SO₃H, ―SO₂―CH₂―CH₂―O―PO₃H₂, -SO₂―CH₂―CH₂-Halogen oder ―SO₂―CH₂―CH₂―O―Acyl bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen überführt werden, in denen die Gruppierung -S0₂-Z die Gruppierung -S0₂-CH=CH₂ bedeutet. Die so erhaltenen Produkte können wiederum durch Umsetzung (Addition) mit Salzen der Thioschwefelsäure, die Natriumthiosulfat, mit Dialkylaminen, wie Dimethyl- oder Diäthylamin, oder mit Phenol in Verbindungen überführt werden, in denen die Gruppierung ―SO₂―Z die Gruppierung ―SO₂―CH₂―CH₂―S―SO₃H, -SO₂―CH₂―CH₂―N(alkyl)₂ oder 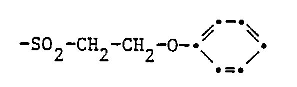 bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphor-oxichlorid oder Gemische aus Phosphorsäure und Phosphor-(V)-oxid. Als Halogenierungsmittel können beispielsweise Thionylchlorid oder Thionylbromid verwendet werden.

Bevorzugt ist die Verwendung von Verbindungen der Formel 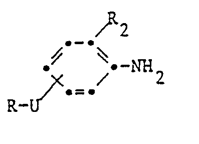 worin R ein Rest der Formel 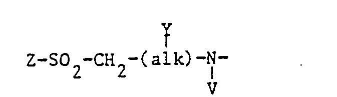 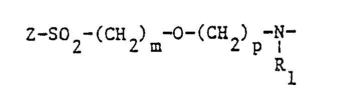 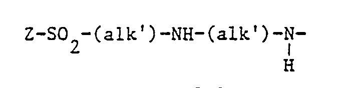 oder 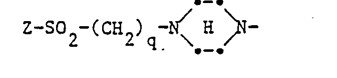 ist; U, Z, alk, A, V, Rᵢ, alk', m, p und q die unter Formel (1a) bis (1d) und (2) angegebenen Bedeutungen haben ; und R₂ Wasserstoff, C₁₋₄-alkyl, C₁₋₄-Alkoxy, Halogen, Hydroxy, Carboxy oder Sulfo ist.

Das bevorzugte Verfahren zur Herstellung der Verbindungen der Formel (13) ist dadurch gekennzeichnet, dass man ein Nitrobenzoylchlorid der Formel 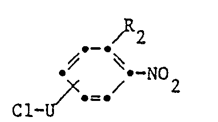 mit einem Amin der Formel 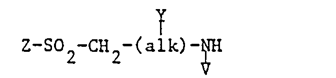 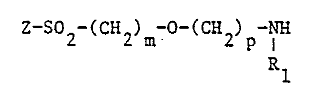 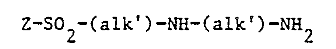 oder 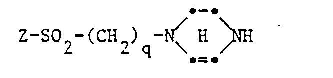 kondensiert, und die Nitrogruppe zur Aminogruppe reduziert. Die Umsetzung wird vorzugsweise in einem hochsiedenden organischen Lösungsmittel, z. B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40 °C. Die Reduktion kann auch mit Fe/Salzsäure oder Fe/Essigsäure in wässriger Lösung durchgeführt werden.

Nach einer Abänderung des oben beschriebenen Verfahrens können Verbindungen der Formel (13) auch in der Weise hergestellt werden, dass man ein Nitrobenzoylchlorid der Formel (14) mit einem Amin der Formel 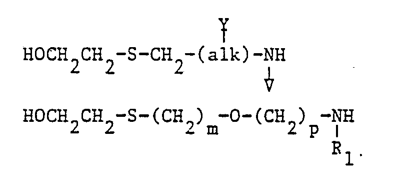 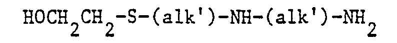 oder 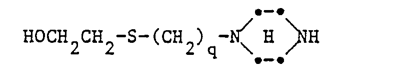 kondensiert, das Kondensationsprodukt mit elementarem Chlor zu der entsprechenden ß-Chloräthylsulfonyl-Verbindung oxydiert und die Nitrogruppe zur Aminogruppe reduziert.

Die Kondensation des Nitrobenzoylchlorids mit den Aminen der Formeln (19) bis (22) wird z. B. in Chloroform bei Raumtemperatur und in Gegenwart von alkalischen, säurebindenden Mitteln, z. B. Alkalihydroxiden, -carbonaten oder -bicarbonaten, durchgeführt. Anschliessend wird das Kondensationsprodukt in .an sich bekannter Weise mit einer Chlor/Salzsäure-Mischung oxidiert. Die Reduktion der Nitrogruppe zur Aminogruppe erfolgt wie oben beschrieben.

Die als Ausgangsverbindungen verwendeten Amine der Formeln (15) bis (22) können analog dem Verfahren des Beispiels 1 der DE-OS 26 14 550 hergestellt werden.

Die Reaktivfarbstoffe der Formel (2) eignen sich zum Färben und Bedrucken der verschiedensten Materialien, wie Seide, Leder, Wolle, Polyamidfasern und Polyurethanen, und insbesondere cellulosehalter Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (2) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auch verschiedene Weise auf das Fasermaterial applizieren und auf der Faser fixieren, insbesondere in Form von wässrigen Farbstofflösungen und - druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (2), worin D' der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z. B. ein Naphthalinsulfonsäure-Formaldehyd-Kondensat oder insbesondere Anthrachinon-2-sulfonsäure, behoben werden.

Die Reaktivfarbstoffe der Formel (2) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d. h., der Seifverlust sehr gering ist. Die Reaktivfarbstoffe der Formel (2) eignen sich auch besonders zum Druck, vor allem auf Baumwolle ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Es sind bereits z. B. aus der DE-OS 2 040 620 oder EP-A 0 172 789 (Priorität 21.08.84 ; Anmeldetag 15.08.85 ; Veröffentlichungstag 26.02.86) Verbindungen der Formel 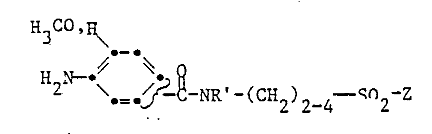 worin R' Wasserstoff oder C₁-C₄-Alkyl und Z ß-Sulfatoäthyl oder ß-Phosphatoäthyl bedeuten als Diazokomponenten für die Herstellung von Monoazofarbstoffen bekannt. Weiterhin sind bereits z. B. aus der DE-OS 1 934 047 Phthalocyaninfarbstoffe der Formel 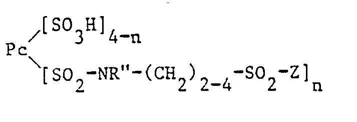 worin R" Wasserstoff, C₁-C₄-Alkyl, Cyclohexyl, Benzyl oder einen Rest ―(CH₂)₂₋₄―SO₂―Z, Z β-Sulfatoäthyl oder ß-Chloräthyl und n 1 bis 4 bedeuten, bekannt. Diese vermögen jedoch nicht alle Wünsche bezüglich der Echtheiten zu erfüllen.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1

11,5 Teile 1-Amino-2-sulfonsäure-4-bromanthrachinon und
9,0 Teile 3-Aminobenzoesäure-N-ß-(ß'-hydroxyäthylsulfonyl)-äthylamid, werden mit
120 Teilen Wasser suspendiert. Bei Raumtemperatur werden
26 Teile Natriumhydrogencarbonat eingestreut, wobei der pH-Wert 8,5 erreicht wird. Die Suspension wird auf 75 °C erwärmt. Bei 70 bis 75 _{°}C und innert 3 Stunden, werden in 12 Portionen
0,3 Teile Kupferpulver/Kupfer I-chlorid 1 : 1 eingetragen. Nach einer weiteren Stunde bei 75 °C ist die Reaktion beendet. Die Suspension wird auf Raumtemperatur abgekühlt und mit
13 g Natriumchlorid (-10 Volumenprozent) ausgesalzen und abfiltriert.

Der gut getrocknete Farbstoff wird zur Herstellung des Schwefelsäureesters in die dreifache Gewichtsmenge Schwefelsäure-Monohydrat eingetragen und bis zur vollständigen Lösung gerührt. Dann giesst man die Farbstofflösung auf Eis, wobei der Esterfarbstoff ausfällt. Er wird abfiltriert, sodann in einer Mischung aus Eis/Wasser angerührt und nach dem Neutralisieren mit Kaliumcarbonat durch Einstreuen von Kaliumchlorid ausgesalzen, abfiltriert und getrocknet.

Der gebildete Reaktivfarbstoff der Formel 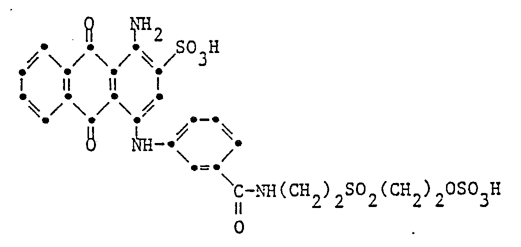 färbt Baumwolle in rein blauen Tönen.

Wird dieser Farbstoff gemäss Färbevorschrift IV eingesetzt, so wird er bei der Alkalizugabe, bedingt durch die eintretende Vinylierung, schwerlöslich, was niedrigere Fixierwerte ergibt. Hervorragende färberische Ergebnisse mit hohen Fixierwerten werden aber erhalten, wenn man den Farbstoff als Formulierung. einsetzt, die wie folgt zusammengesetzt ist:
6,3 Teile des Farbstoffs der oben angegebenen Formel,
2,4 Teile Naphthalinsulfonsäure-Formaldehyd-Dispergator und
1,3 Teile Anthrachinon-2-sulfonsäure,

wobei der Dispergator gegebenenfalls auch weggelassen werden kann.

Analog können alle folgenden Anthrachinonfarbstoffe mit knapper Löslichkeit im Foulardverfahren eingesetzt werden.

Nach dem Verfahren von Beispiel 1 können folgende Farbstoffe synthetisiert werden :

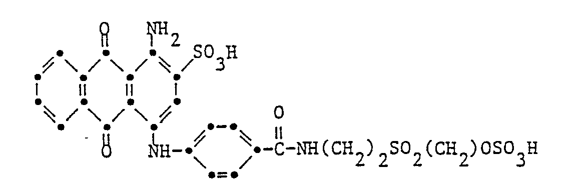

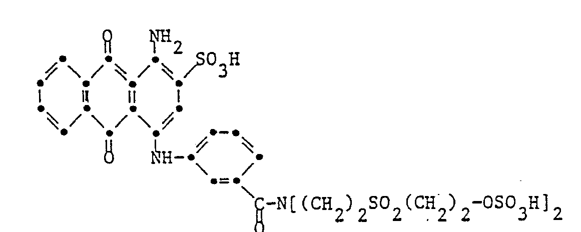

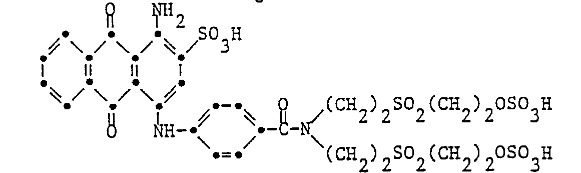

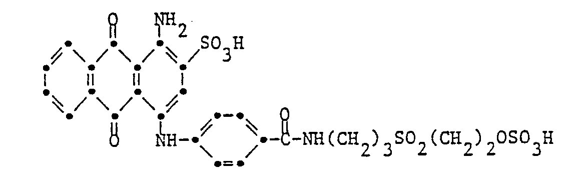

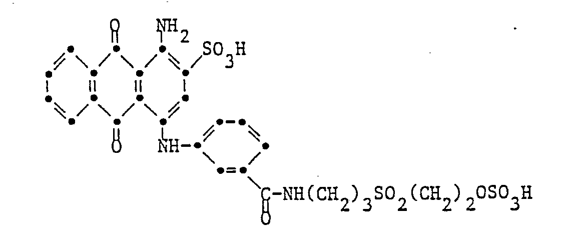

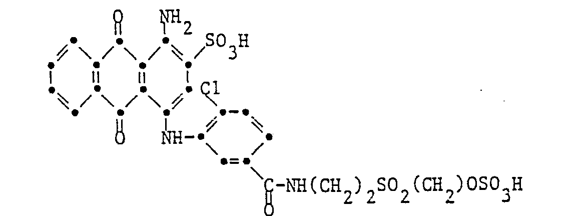

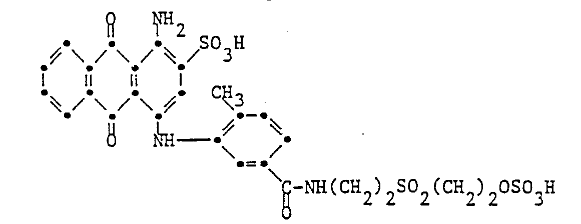

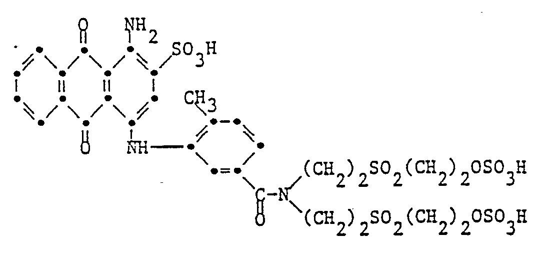

### Beispiel 2

300 Teile Chlorsulfonsäure werden bei Raumtemperatur vorgelegt. Nun werden

36 Teile Kupferphthalocyanin portionenweise innert einer Stunde ein getragen. Die Temperatur wird nun langsam innert zwei Stunden auf 110 °C erhöht. Innert einer Stunde wird die Temperatur auf 135 °C erhöht. Unter gutem Rühren wird die Reaktionslösung 6 1/2 Stunden bei 130 bis 135°C gerührt, anschliessend auf Raumtemperatur abgekühlt und auf Eis/Wasser-Mischung ausgetragen ; Endvolumen 2,5 Liter. Nun wird mit

37 Teilen (1,5 Volumenprozent) Natriumchlorid versetzt und filtriert. Das Nutschgut mit Eiswasser (1,5 % NaCl) kongoneutral gewaschen.
Die 250 Teile Paste werden mit
800 Teilen Eiswasser suspendiert, pH 2,5 bis 3,0.
Nun wird eine Lösung von
56 Teilen 3-Aminobenzoesäure-N-ß-(ß'-chioräthyisulfonyl)äthylamidhydrochlorid, gelöst in
200 Teilen Wasser zugegeben ; pH von ca. 2,0. Der pH wird langsam auf 5,0 bis 5,5, erhöht mit
20 Teilen conc. ammoniakalischer Lösung, dabei wird die Temperatur allmählich bis 25 °C erhöht.

Zur Beendigung der Reaktion wird bei 50 °C sechs Stunden gerührt, während der pH-Wert mit 2n Ammoniak bei 5,0 gehälten wird.

Mit 120 Teilen Natriumchlorid (5 Volumenprozent) wird der Farbstoff folgender Formel 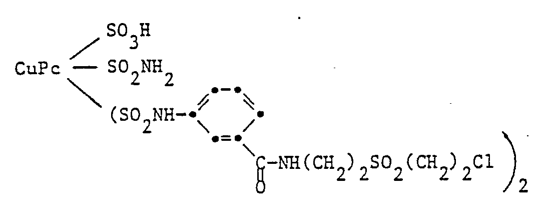 ausgesalzen. Er färbt Baumwolle in Türkistönen.

Analog können folgende Farbstoffe synthetisiert werden :

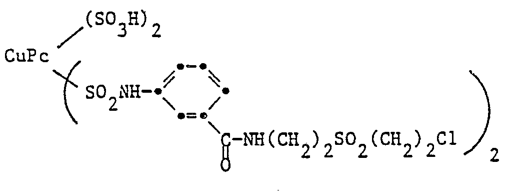

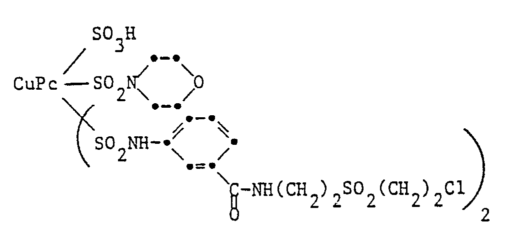

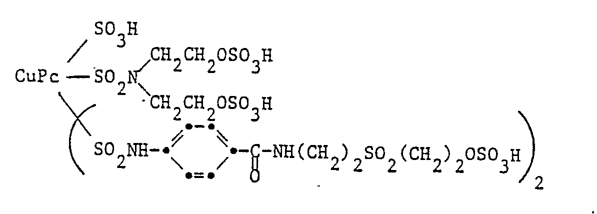

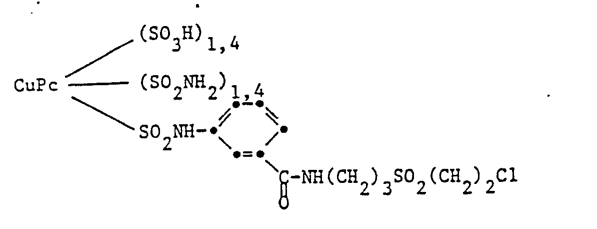

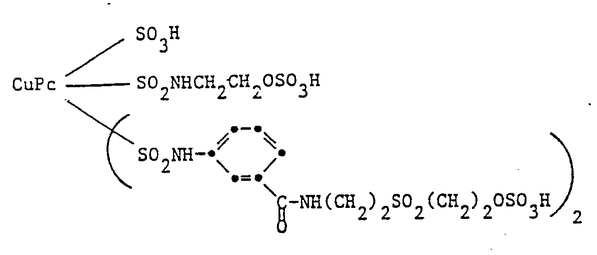

### Beispiel 3

186 Teile 3-Nitrobenzoylchlorid werden in 1 200 Teilen Nitrobenzol bei Raumtemperatur gelöst. Anschliessend gibt man 210 Teile β-(β-Chloräthyisulfonyl)-äthylamin-hydrochlorid zu. Unter gutem Rühren und überleiten von Stickstoff wird die Suspension auf 100° erhitzt und bei dieser Temperatur ca. 3 Stunden gerührt (bis man 2 Mol HCI mit Natronlauge neutralisiert hat). Es entsteht eine Lösung, die dann auf Raumtemperatur abgekühlt wird. Dabei fällt das Produkt aus. Dieses wird abfiltriert und das Nutschgut mit methanolischer Lösung nitrobenzolfrei gewaschen. (Anstelle der methanolischen Behandlung kann man das Nitrobenzol durch Wasserdampfdestillation entfernen).

Man erhält 235 Teile analysereines Produkt folgender Konstitution : 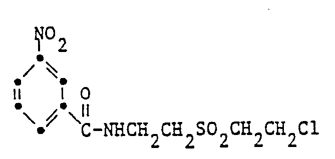
Analyse : theor. Chlor kovalent 11,1 %
gef. Chlor kovalent 11,2 %.

### Beispiel 4

52 Teile 2'-Aminoäthyl-2-thioäthanol werden in 600 Teilen Chloroform bei Raumtemperatur gelöst. Anschliessend gibt man 50 Teile Natriumcarbonat bei 10 bis 20° zu. Dann werden 74 Teile 3-Nitrobenzoylchlorid gelöst in 200 Teilen Chloroform zugetropft (leicht exotherm) und 1 Stunde bei Raumtemperatur gerührt. Nun werden nochmals 50 Teile Natriumcarbonat zugegeben und 12 Stunden bei Raumtemperatur reagieren gelassen. Das entstandene Kochsalz wird entfernt und das Chloroform wird mittels Hochvakuum abdestilliert. Der Rückstand wird nun nach bekannten Verfahren mit Chlor/Salzsäure-Mischung zu dem in Beispiel 3 erwähnten Produkt oxydiert.

### Beispiel 5

Dasselbe Produkt erhält man auch, wenn anstelle von Nitrobenzol, o-Dichlorbenzol, Trichlorbenzol, Toluol oder Benzol etc. verwendet wird.

### Beispiel 6

Verfährt man wie im Beispiel 3 und benützt anstelle von 186 Teilen 3-Nitrobenzoylchlorid dieselbe Menge 4-Nitrobenzoylchlorid, so erhält man folgendes Produkt :

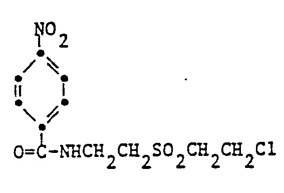

### Beispiel 7

Verfährt man wie im Beispiel 3 und verwendet anstelle von 210 Teilen β-(β-Chloräthylsulfonyl)-äthylamin eine äquimolare Menge des y-(ß-Chloräthylsulfonyl) propylamin-hydrochlorids, so erhält man folgendes Produkt :

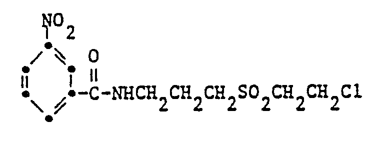

### Beispiel 8

Verfährt man wie im Beispiel 3 und verwendet anstelle von 210 Teilen β-(β-Chloräthylsulfonyl)-äthylamin äquimolare Mengen von Bis-[ß-(ß'-chloräthylsulfonyl)-äthyl]-amin-hydrochlorid, so erhält man folgendes Produkt:

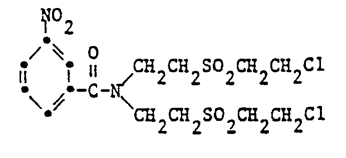

### Beispiel 9

Verfährt man wie im Beispiel 6 und verwendet anstelle von 210 Teilen ß-(ß'-Chloräthylsulfonyl)-äthylamin äquimolare Mengen von Bis-[ß-(ß'-chloräthylsulfonyi)-äthyl]-amin-hydrochlorid, so erhält man folgendes Produkt

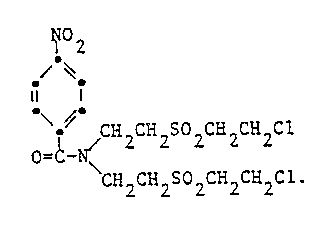

In analoger Weise, wie in den Beispielen 3 bis 9 beschrieben, können die Zwischenprodukte der folgenden Formeln synthetisiert werden.

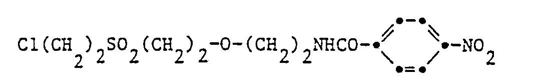

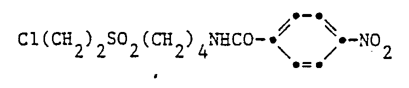

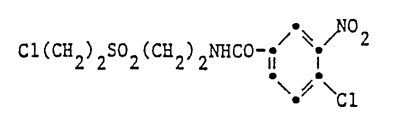

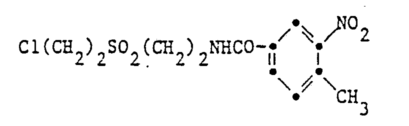

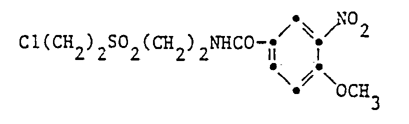

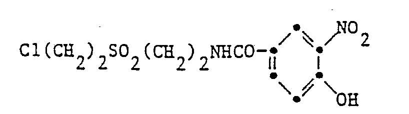

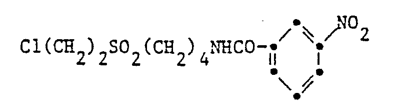

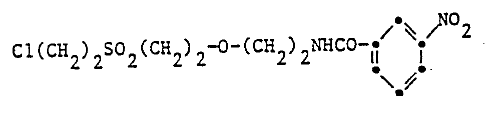

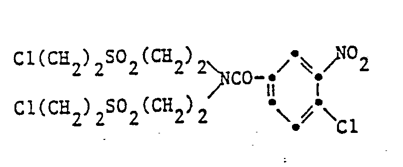

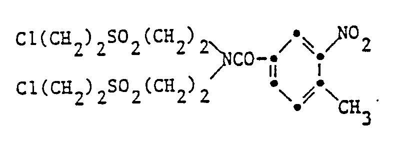

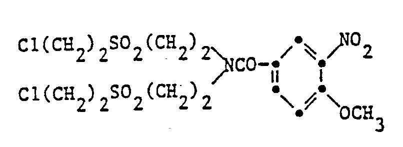

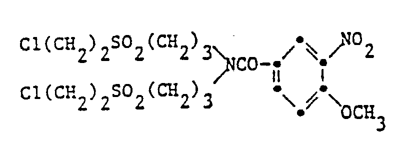

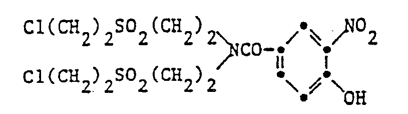

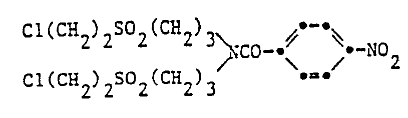

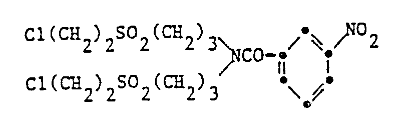

Die in den Beispielen 3 bis 9 beschriebenen und im Anschluss an Beispiel 9 genannten Zwischenprodukte werden katalytisch in Alkohol, Essigester oder Tetrahydrofuran bei Raumtemperatur bis etwa 40 °C mit Pd/Kohlenstoff hydriert oder mit Fe/Salzsäure bzw. Fe/Essigsäure reduziert. Dabei geht die Nitrogruppe in die -NH₂ Gruppe über. Die so erhaltenen Amine werden erfindungsgemäss als Ausgangsverbindungen zur Herstellung der Reaktivfarbstoffe der Formel (2) verwendet.

### Beispiel 10

### Sulfatierung der Verbindung

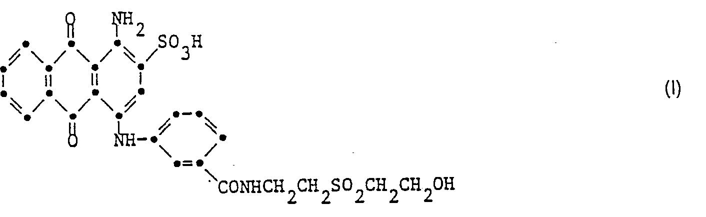

In einem Reaktionsgefäss werdem 55 Volumenteile trockenes Pyridin vorgelegt und bei 0 bis 5 °C 2 Volumenteile Chlorsulfonsäure tropfenweise bei dieser Temperatur eingetragen. Anschliessend werden 8,3 Gewichtsteile des gut getrockneten Farbstoffe der Formel eingestreut und über Nacht bei Raumtemperatur nachgerührt. Nun wird die Reaktionsmasse im Rotationsverdampfer bei 70 °C vom Pyridin befreit. Der Rückstand wird in 150 Volumenteilen Wasser aufgenommen und mit 15% Kochsalz ausgesalzen. Der Farbstoff wird abfiltriert, mit Sole 15% gewaschen und getrocknet. Der erhaltene Farbstoff hat die Formel

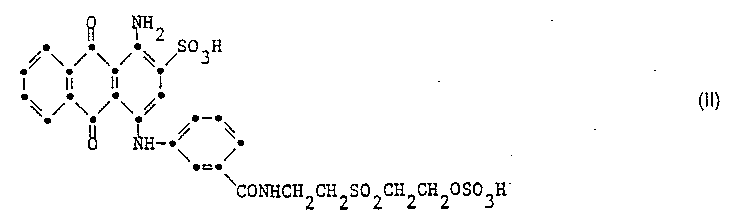

### und ist gemäss HPLC einheitlich.

Analog herstellbar ist der Farbstoff der Formel 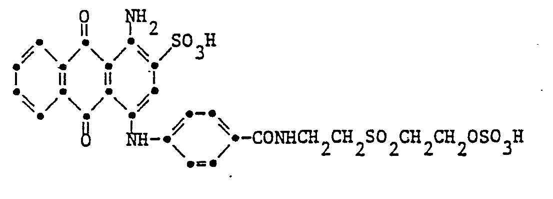 wenn gemäss Beispiel 1 verfahren wird unter Verwendung der isomeren para-Verbindung

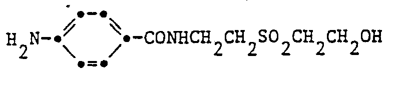

Nach gleichem Verfahren können die folgenden Farbstoffe hergestellt werden, wobei eine eventuell mangelnde alkalische Flottenlöslichkeit durch Zusatz von Anthrachinon-2-sulfonsäure und gegebenfalls Dispergatoren wesentlich verbessert werden kann.

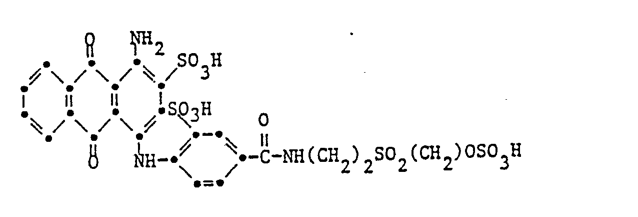

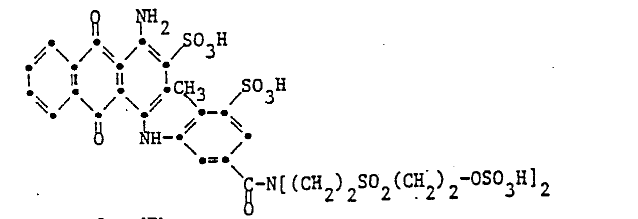

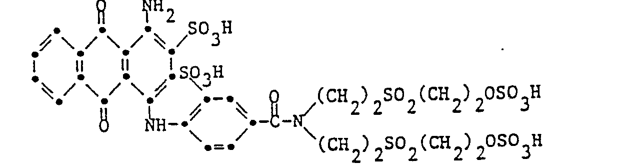

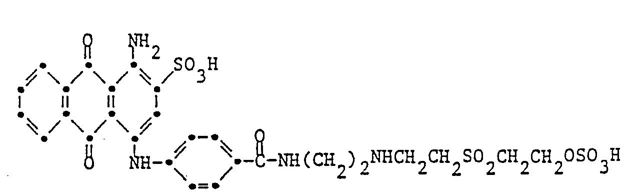

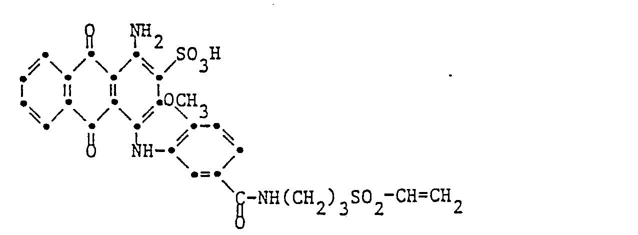

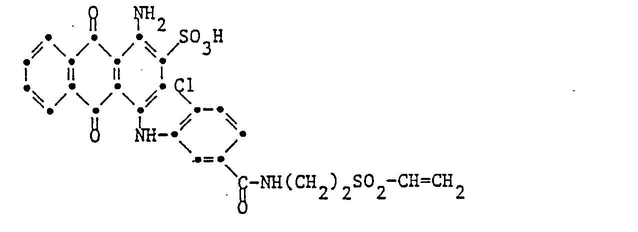

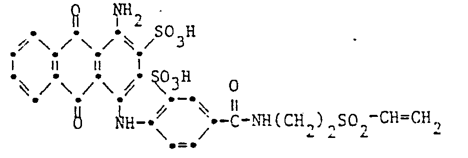

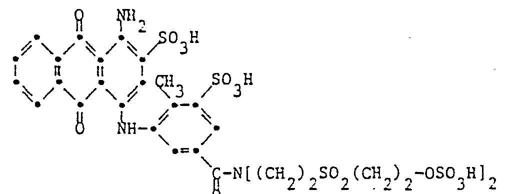

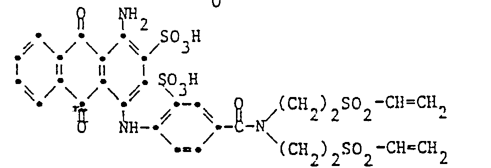

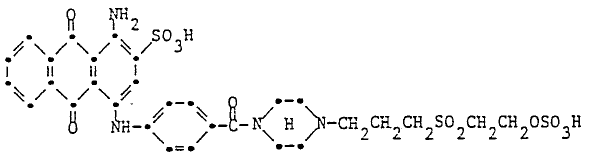

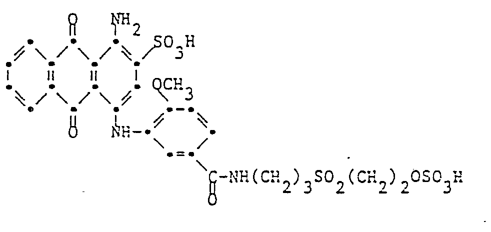

### Beispiel 11

### Darstellung der Verbindung der Formel

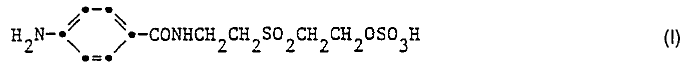

In einem Planschliffgefäss werden 43 Gewichtsteile 2-Mercaptoäthanol (=₀,₅₅ Mol) mit 110 Volumenteilen Natronlauge 30 % (= 1,1 Mol) versetzt, wobei eine Erwärmung auf 50 °C erfolgt. Bei dieser Temperatur wird eine Lösung von 63.8 g 2-Chloräthylamin-Hydrochlorid (= 0,55 Mol) in 38 Volumenteilen Wasser innerhalb von 2 Stunden zugetropft. Zu dem gebildeten Thioäther der Formel 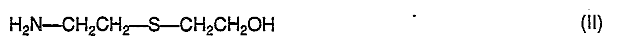 wird bei 25 °C eine Lösung von 92,8 Gewichteilen 4-Nitrobenzoylchlorid (= 0,5 Mol) in 120 Volumenteilen Toluol und simultan dazu 50 Volumenteile Natronlauge 30 % (= 0,5 Mol) innerhalb von 1 1/2 Stunden unter intensivem Rühren zugetropft. Der Ena-pH beträgt 9 und es liegt eine Emulsion vor für deren Hauptanteil die Formel zutrifft.

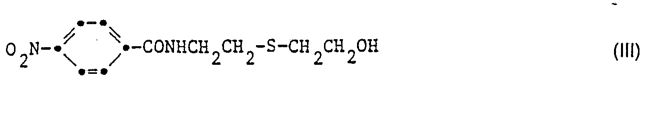

Nun wird im gleichen Gefäss zum Sulfon oxidiert : Die Reaktionsmasse wird erst mit Eisessig auf pH 5,0 eingestellt und mit 0,2 g Wolframsäure versetzt. Nun tropft man, bei Raumtemperatur beginnend, 53 Volumenteile Wasserstoffperoxid 35 % (= 0,6 Mol) innert 30' dazu, wobei man die Temperatur ohne Kühlung ansteigen lässt. Nun wird die Reaktionstemperatur auf 85°C eingestellt und nochmals 53 Volumenteile Wasserstoffperoxid (= 0,6 Mol) innert 2 h zugetropft. Mit leichtem Ks-Stärke-Anschlag wird 6 h bei 85 °C nachgerührt. Nun wird die Toluolphase abgetrennt und verworfen. In der Wasserphase kristallisiert das Produkt der Formel 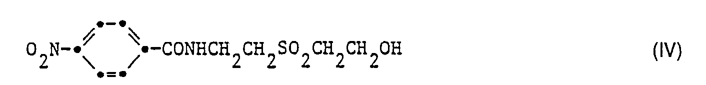 welches bei Raumtemperatur abfiltriert, mit Wasser gewaschen und sodann getrocknet wird. Die Ausbeute, bezogen auf p-Nitrobenzoylchlorid, beträgt 94 %, die Reinheit ist hoch.

Das erhaltene Produkt wird in Aethanol mit Pd/C 5 % bei 45 °C katalytisch hydriert. Die eingeengte Reaktionsmasse kristallisiert innerhalb eines Tages. Es liegt das Amin der Formel 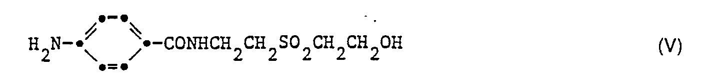 vor. Smp. 148-149 °C.

89 Gewichtsteile Amin der Formel V, gut getrocknet und fein gepulvert werden zwischen 30 und 40 °C innert 45' in 80 Volumenteilen Oleum 25 % eingerührt und die viskose Masse während 6 h bei 45 °C nachgerührt. Nach Austragung auf 900 Gewichtsteile Eis-Wasser erfolgt spontan die Kristallisation. Die Fällung wird filtriert und mit Aceton schwefelsäurefrei gewaschen und getrocknet. Die Ausbeute ist nahezu quantitativ. Das Produkt entspricht der Formel I.

### Beispiel 12

Die Darstellung der Verbindung der Formel 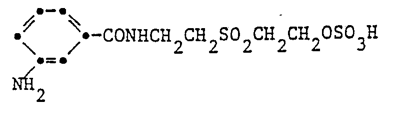 erfolgt wie im vorhergehenden Beispiel beschrieben, nur wird anstatt p-Nitrobenzoylchlorid das m-Nitrobenzoylchlorid eingesetzt.

Nach gleichem Prozedere sind die folgenden Zwischenprodukte zugänglich : 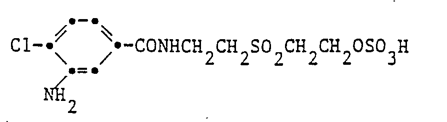 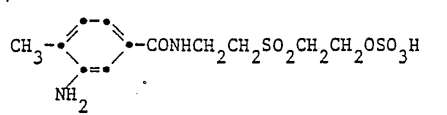 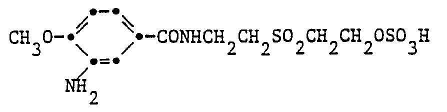 Beispiel 13

Beispiel zur Herstellung des Farbstoffs der Formel

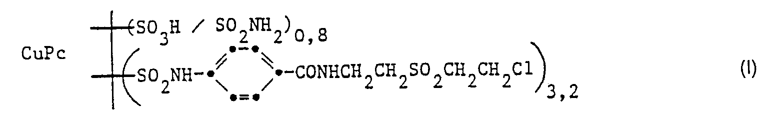

In einem Reaktionsgefäss werden 285 Raumteile Chlorsulfonsäure bei 25 °C vorgelegt und bei dieser Temperatur 60 Gewichtsteile Cu-Phthalocaninpigment portionenweise eingetragen (≚ 0,1 Mol). Nun wird 1 Stunde bei 70 bis 75 °C gerührt und anschliessend innert 1 Stunde auf 130 bis 135°C erhöht und 5 Stunden belassen. Dann lässt man bei 70 bis 75 °C innerhalb 45' 125 Raumteile Thionylchlorid zutropfen und rührt 1 Stunde bei 70 bis 75 °C und 1 Stunde bei 85 bis 90 °C. Nach Erkalten auf Raumtemperatur wird die Reaktionsmasse tropfenweise auf Eis ausgetragen, wobei die temperatur nicht über 0 °C steigen sollte. Nach Filtration wird mit Eiswasser die Schwefelsäure gründlich ausgewaschen. Die abgepresste Masse entspricht dem Produkt der Formel

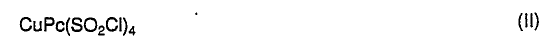

Die Paste wird in 500 Raumteilen Eiswasser homogenisiert und mit 130,8 Gewichtsteilen Amin der Formel 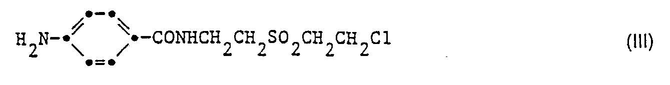 versetzt. Jetzt wird die Suspension mit 2n-Ammoniak auf pH konstant = 5,0 gestellt und während 18 Stunden bei 50 °C und pH 5,0 kondensiert. Es liegt stets eine Suspension vor. Nach Filtration des Farbstoffes wird das nichtkondensierte Amin der Formel 111 im Filtrat mittels Nitrittiter und HPLC quantitativ bestimmt. Die Formel entspricht demnach I. Der getrocknete Farbstoff wird in einer Glaskugelmühle wässrig gemählen, wobei 2 % eines handelsüblichen Ligninsulfonat-Dispergators zugesetzt werden.

Die homogene Dispersion ergibt nach Färbevorschrift V angewandt egale hochfixierte Färbungen, die vor allem ein ausgezeichnetes Anwendeverhalten aufweisen.

Wird anstelle der Verbindung der Formel III das Sulfatoesterprodukt aus Beispiel 11, Formel 1, eingesetzt, so erhält man sinngemäss wiederholt einen gut wasserlöslichen Phthalocyaninfarbstoff der Formel 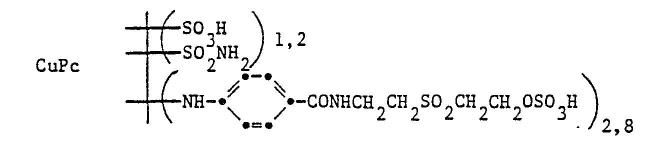 mit ebenso guten färberischen Eigenschaften.

### Beispiel 14

Anstelle des Amins in Beispiel 11, Formel I, kann das meta-Isomere der Formel 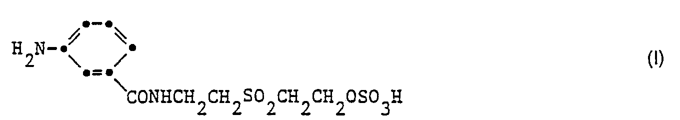 (aus Beispiel 12) in Beispiel 13 als Kondensationspartner eingesetzt werden, wobei die Kondensationsgrade höher ausfallen als beim para-Produkt.

Beim Einsatz von 2 Aequivalenten des Amins der Formel I (Beispiel 14) erhält man ein Produkt der statistischen Formel

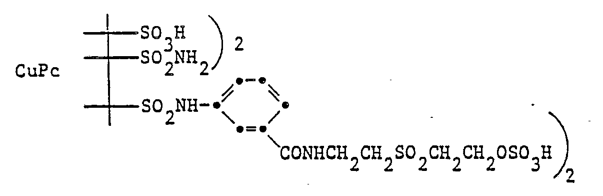

Dieser Farbstoff ist ausgezeichnet wasserlöslich. Nach Färberezeptur V appliziert ergeben sich hohe Fixierwerte und ausgezeichnete Aufbauwerte.

Folgende Amine werden analog Beispiel 13 kondensiert :

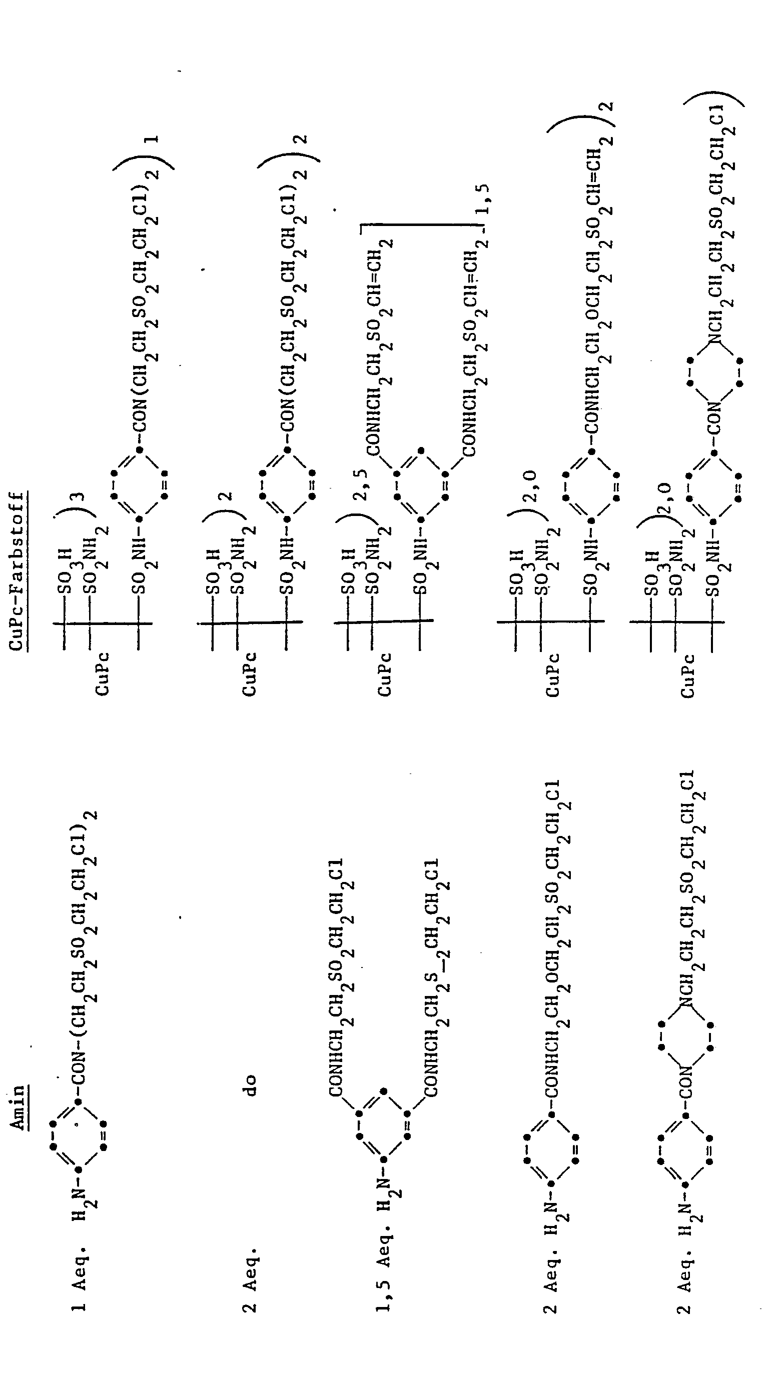

### Beispiel 15

Anstelle von Ammoniak als Base bei der Kondensation, wie in Beispiel 13 angeführt, können folgende Amine vorteilhaft eingesetzt werden :

H₂NCH₂CH₂OH
H₂NCH₂CH₂OCH₂CH₂OH
H₂NCG₂CH₂OCH₂CH₂OSO₃H
HN(CN₂CH₂OH)₂
HNCH₂CH₂OCH(CH₃)₂

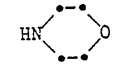

daraus ergeben sich die folgenden besonders wertvollen Farbstoffe :

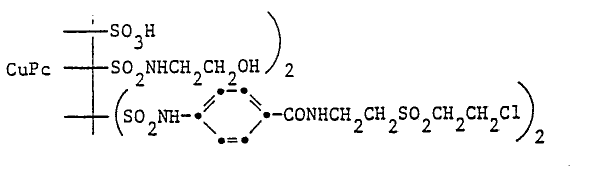

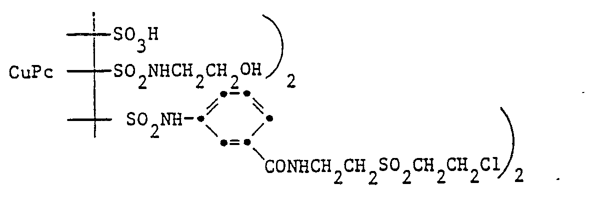

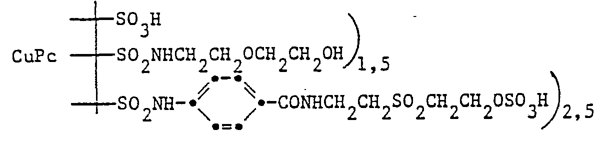

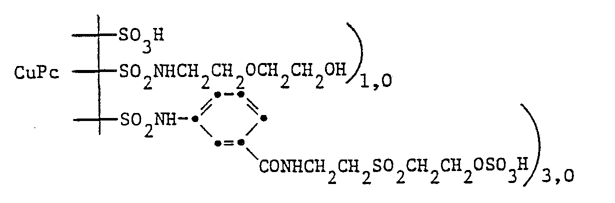

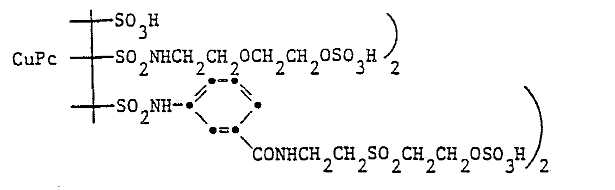

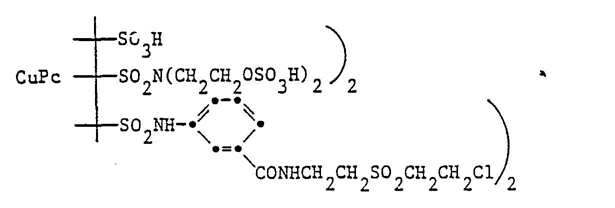

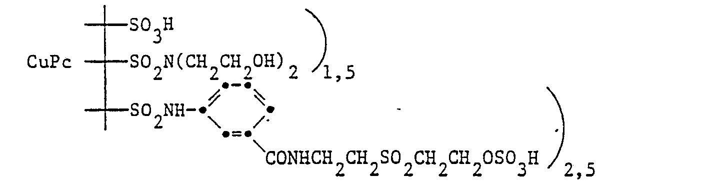

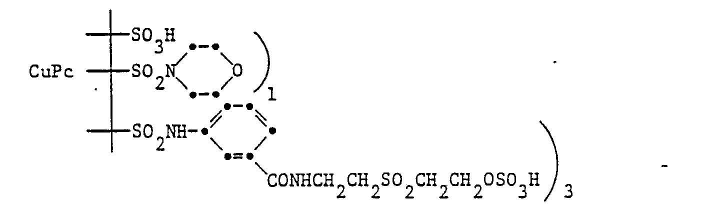

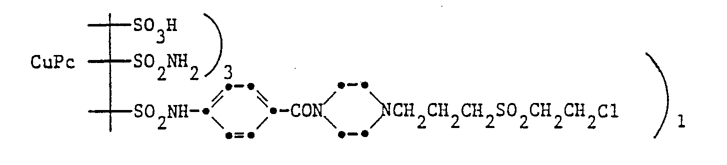

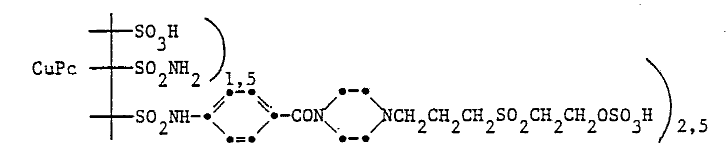

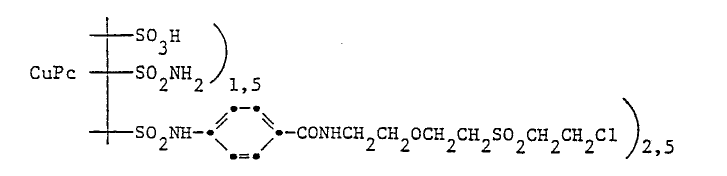

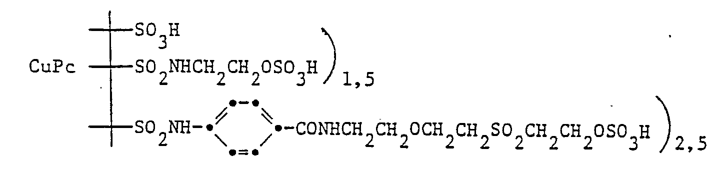

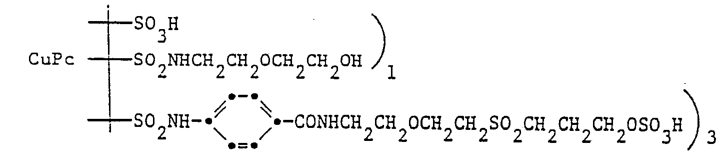

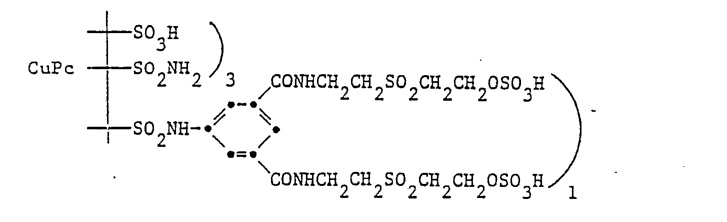

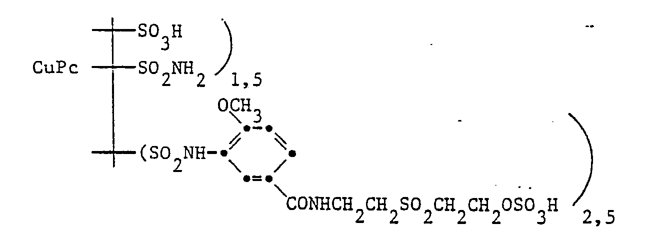

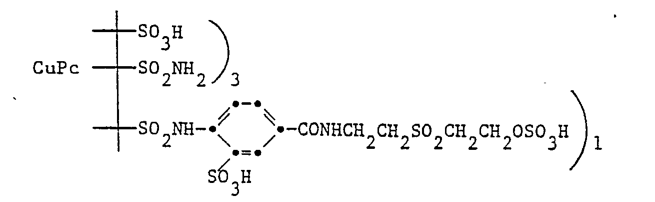

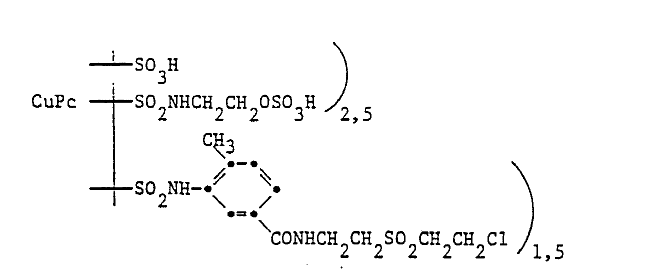

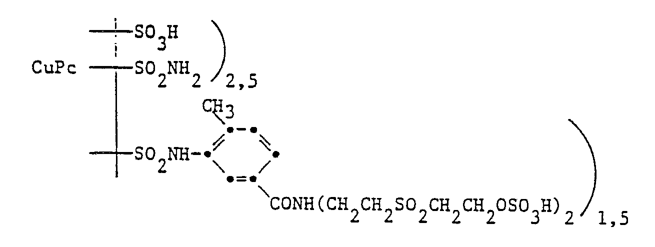

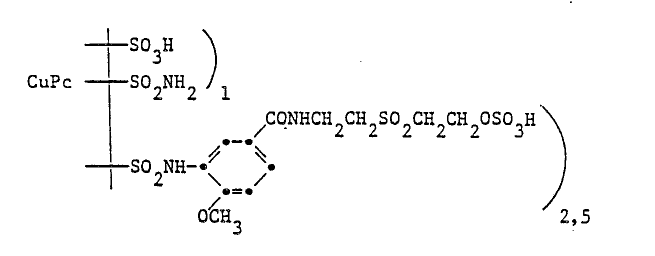

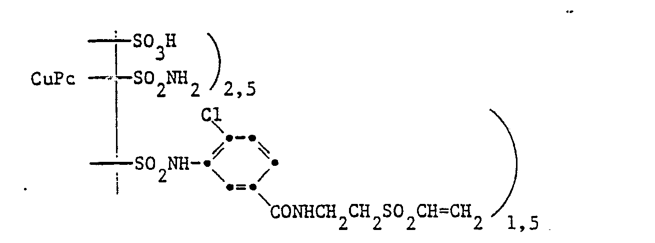

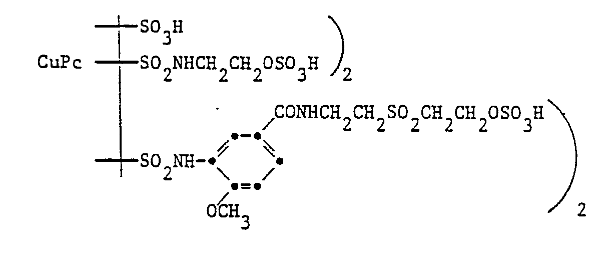

### Beispiel 16

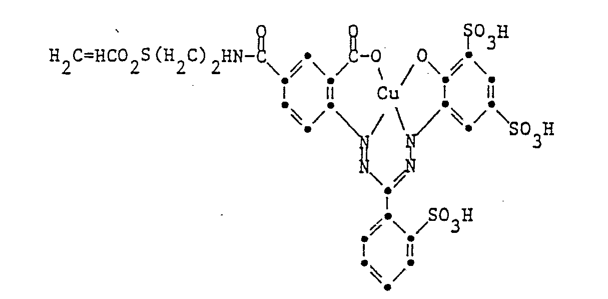

23,4 Teile 3-Carbonsäure-4-aminobenzoesäure-N'-ß-(ß'-chloräthylsulfonyl)-äthylamid werden in 180 Teilen Wasser gelöst. Dann wird mit 13 Teilen Salzsäure konz. versetzt und bei 0°C mit 175 Teilen 4N Natriumnitrit diazotiert. Nachher wird die Suspension mit Natriumcarbonat auf pH-Wert 4,5 gestellt. Anschliessend gibt man 12,95 Teile Natriumsulfit und 7 Teile Natriumpyrosulfit zu. Nun wird die Temperatur innert 30 Minuten auf 50 °C erhöht und bei einem pH-Wert von 6,0 und 50 bis 55 °C zwei Stunden lang gerührt. Mit 0,35 Teilen Natriumdithionit wird 15 Minuten bei 30°C gerührt, und anschliessend werden 11,2 Teile Salzsäure 32 % zugetropft. Dann gibt man innert ca. 10 Minuten 13,65 Teile Benzaldehyd-2-sulfonsäure zu. Danach wird innert 15 Minuten mit Salzsäure konz. versetzt bis ein pH-Wert 1 bis 1,5 erreicht ist. Mit 16 Teilen Kochsalz wird das gebildete Hydrazon ausgefällt und filtriert. Das Nutschgut wird als Presspaste in 100 Teilen Wasser vorgelegt und gut verrührt. Bei maximaler Rührgeschwindigkeit und sehr rascher Zugabe von 30 % Natronlauge wird auf einen pH-Wert von 6,0 bis 6,7 gestellt. Innert 30 Minuten werden 15 Teile Kupfer-(II)-sulfat 5 Aq. gelöst in 40 Teilen Wasser zugegeben und gleichzeitig durch Zulauf von 30 % Natronlauge bei einem pH-Wert von 6,5 bis 7,0 gehalten. Es entsteht eine olivegrüne Suspension. Anschliessend werden 16,1 Teile diazotierte 2-Aminophenol-4,6 disulfonsäure innert 30 Minuten zugegeben und gleichzeitig durch Zulauf von ca. 20 Teilen Natronlauge 30 % bei dem pH-Wert 7,0 gehalten, und eine Stunde bei Raumtemperatur und dem pH-Wert 7,0 gerührt. Dann wird bei Raumtemperatur und einem pH-Wert von 10,0 30 Minuten lang vinyliert. Nun wird der pH-Wert auf 6,5 gestellt. Die Lösung wird klärfiltriert und durch Sprühtrocknung erhält man ein blaues Pulver, das neben Elektrolyt das Natriumsalz der Verbindung der oben angegebenen Formel enthält. Diese liefert nach den für faserreaktive Farbstoffe üblichen Färbeweisen auf Baumwolle und Wolle grünstichig blaue Färbungen und Drucke mit guten Allgemeinechtheiten.

Nach der in Beispiel 16 beschriebenen Verfahrensweise lassen sich auch die Reaktivfarbstoffe der folgenden Formeln herstellen.

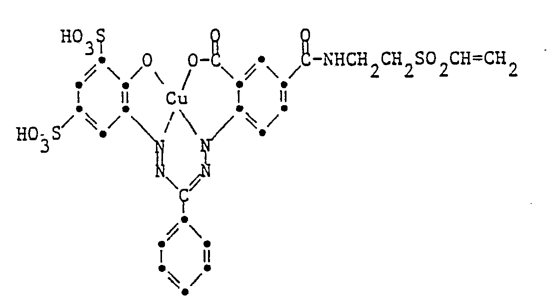

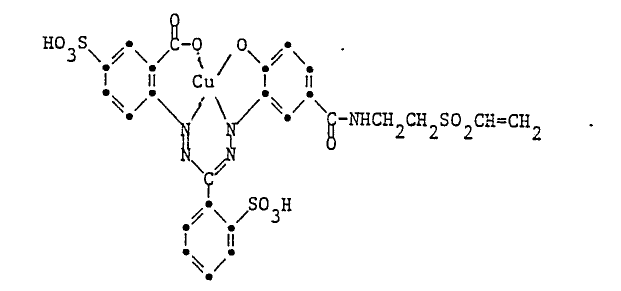

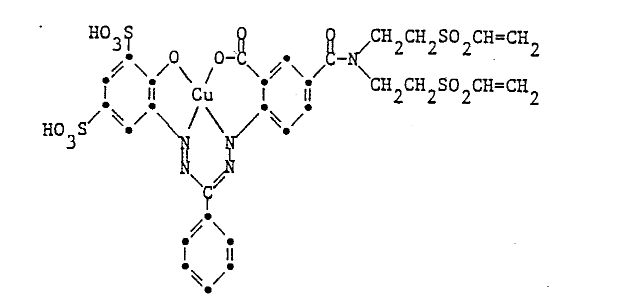

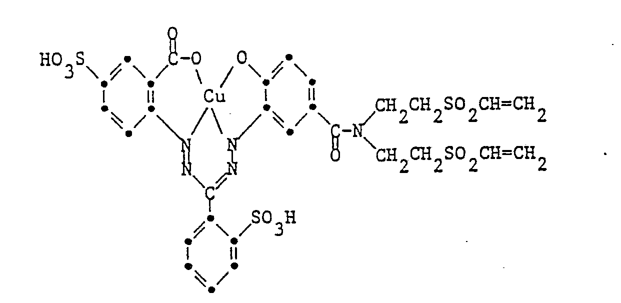

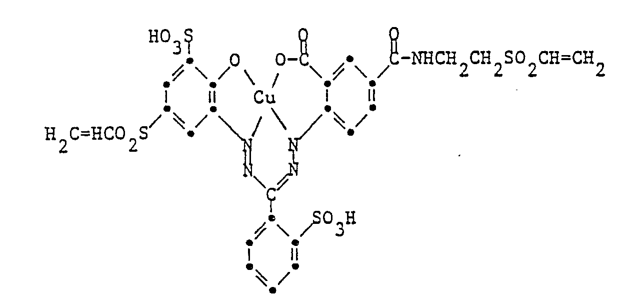

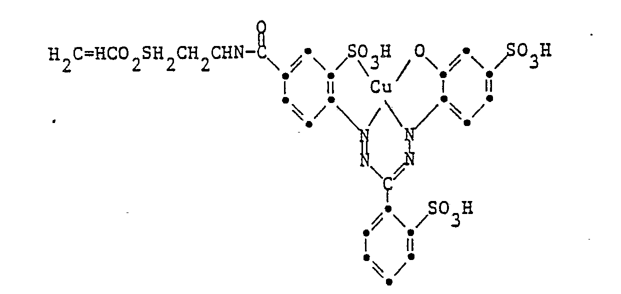

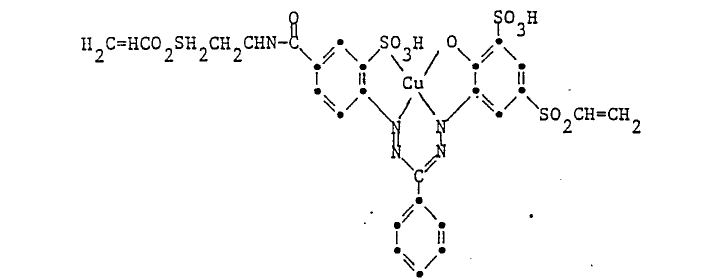

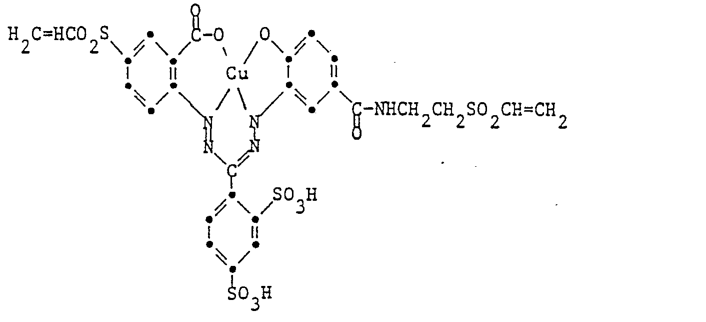

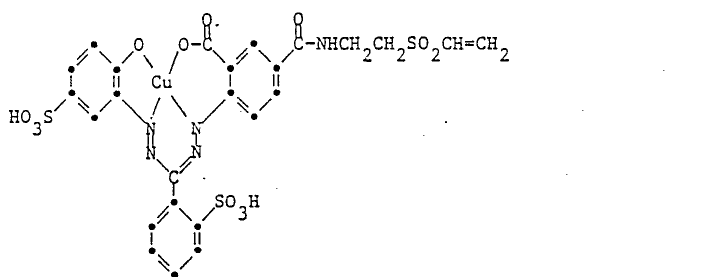

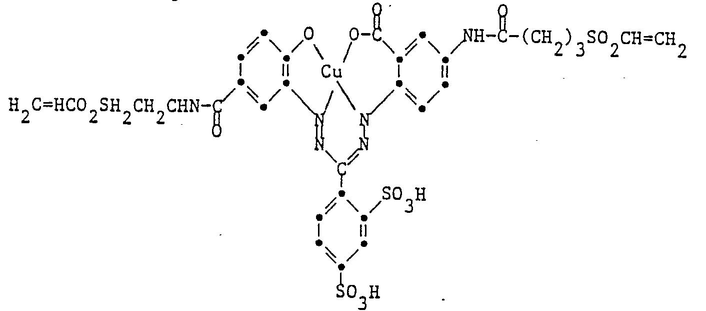

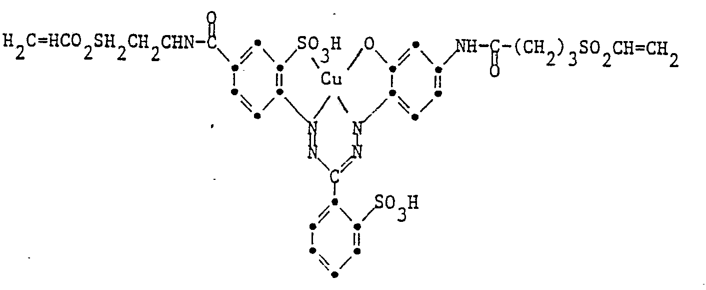

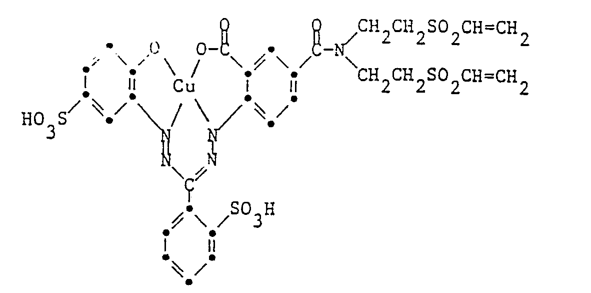

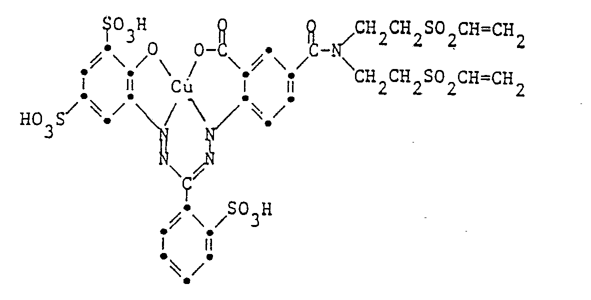

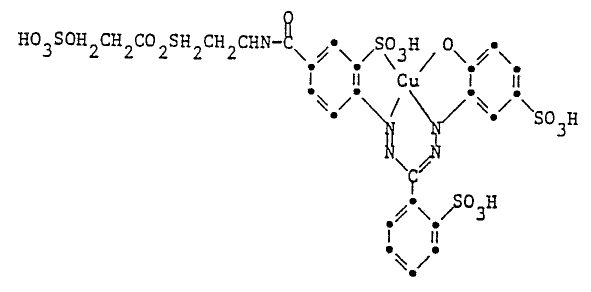

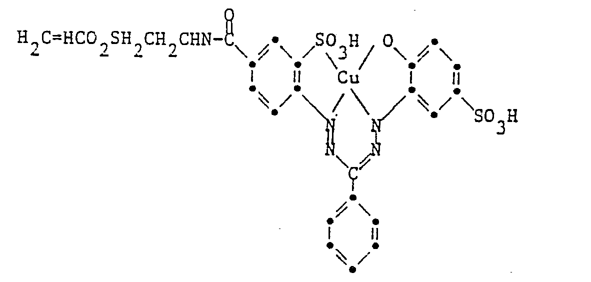

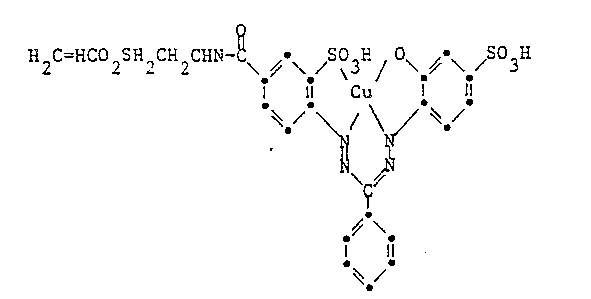

### Färbevorschrift I

2 Teile des gemäss Beispiel 1 erhaltenen Farbstoffes werden in 400 Teilen Wasser gelöst; dazu gibt man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die' gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst ; dazu gibt man 1 500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespüllt, während einer Viertelstunde mit einem nichtionogenen Waschmittel kochend geseift, nochmals gespült und getrocknet.

### Färbevorschrift 111

8 Teile des gemäss Beispiel 1 erhaltenen Reaktivfarbstoffes werden in 400 Teilen Wasser gelöst ; dazu gibt man 1 400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten.' Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Be) enthält. Mit der erhaltenen Lösung wird ein Baumwollgewebe foulardiert, so dass es um 70 % seines Gewichtes zunimmt, und dann auf eine Kaulge aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20 °C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3 %igen kochenden Lösung eines nichtionogenen Waschmittels, spült und trocknet.

### Druckvorschrift I

3 Teile des gemäss Beispiel 1 erhaltenen Reaktivfarbstoffes werden unter schnellen Rühren in 100 Teile einer Stammverdickung, enthaltend 50 Teile 5 %ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 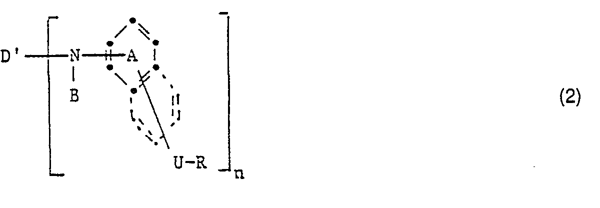 worin D' der Rest eines Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes ;
U -CO- ; eim Rest der Formel 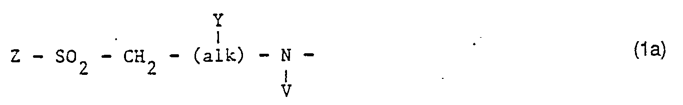 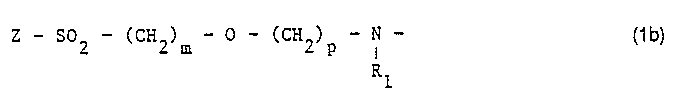 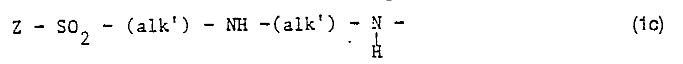 oder 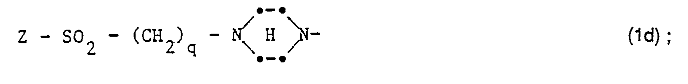 Z Sulfatoäthyl, ß-Thiosulfatoäthyl, ß-Phosphatoäthyl, ß-Acetoxyäthyl, ß-Halogenäthyl oder Vinyl ; alk ein Polymethylenrest mit 1 bis 6 C-Atomen oder dessen verzweigte Isomere Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest ―SC₂―Z, worin Z die oben angegebene Bedeutung hat; V Wasserstoff oder ein Alkylrest mit 1 bis 4 C-Atomen, der durch Carboxy, Sulfo, Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsul- famoyl, Methylsulfonyl, Aethylsulfonyl und Propylsulfonyl, Alkoxygruppen mit 1 oder 2 C-Atomen, Halogen oder Hydroxy substituiert sein kann ; oder ein Rest 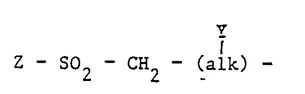 worin Z, alk und Y die angegebenen Bedeutungen haben; R₁ Wasserstoff oder C₁₋₆-Alkyl; alk' unabhängig voneinander Polymethylenreste mit 2 bis 6 C-Atomen oder deren verzweigte Isomere ; n = 1 bis 4, m = 1 bis 6, p = 1 bis 6, q = 1 bis 6 und B Wasserstoff oder Alkyl mit 1 bis 4 Kohlenstoffatomen, das durch Carboxy, Sulfo, Cyan oder Hydroxy substituiert sein kann, ist; und der Benzol- bzw. Naphthalinrest A weitere Substituenten enthalten kann.

2. Reaktivfarbstoffe gemäss Anspruch 1, der Formel 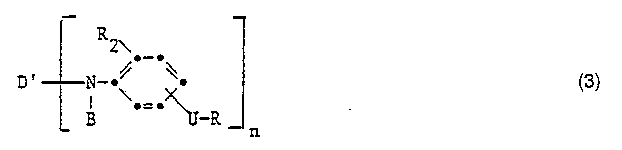 worin R₂ Wasserstoff, C₁₋₄-Alkyl, C₁₋₄-Alkoxy, Halogen, Hydroxy, Carboxy oder Sulfo ist; und D', B, U, R und n die in Anspruch 1 angegebenen Bedeutungen haben.

3. Reaktivfarbstoffe gemäss Anspruch 2, worin D' der Rest eines Anthrachinonfarbstoffes ist.

4. Reaktivfarbstoffe gemäss Anspruch 2, worin D' der Rest eines Phthalocyaninfarbstoffes ist.

5. Reaktivfarbstoffe gemäss Anspruch 3, worin D' der Rest eines Anthrachinonfarbstoffes der Formel 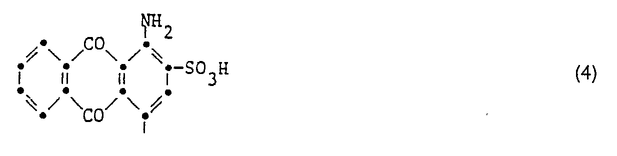 ist, wobei der Anthrachinonkern durch eine weitere Sulfogruppe substituiert sein kann.

6. Reaktivfarbstoffe gemäss Anspruch 4, worin D' der Rest eines Phthalocyaninfarbstoffes der Formel 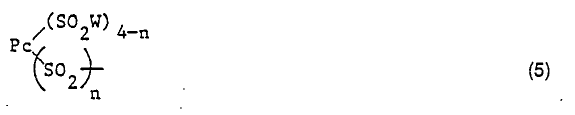
Pc der Rest eines Kupfer- oder Nickelphthalocanins ; W ―OH und/oder ―NR₃R₄; R₃ und R₄ unabhängig voneinander Wasserstoff oder Alkyl mit 1 bis 4 Kohlenstoffatomen, das durch Hydroxy, Alkoxy, Hydroxyalkoxy, Sulfo, Sulfato, oder Sulfatoalkoxy substituiert sein kann, oder worin -NR₃R₄ einen Morpholinorest bildet ; und n die für Anspruch 4 geltende Bedeutung hat.

7. Reaktivfarbstoffe gemäss Anspruch 1, worin Z die β-Sulfatoäthyl-, β-Chloräthyl- oder Vinylgruppe ist.

8. Verfahren zur Herstellung von Reaktivfarbstoffen gemäss Anspruch 1, dadurch gekennzeichnet, dass man einen Farbstoff der Formel 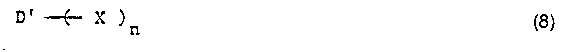 worin X ein Halogenatom ist, mit einem Amin der Formel 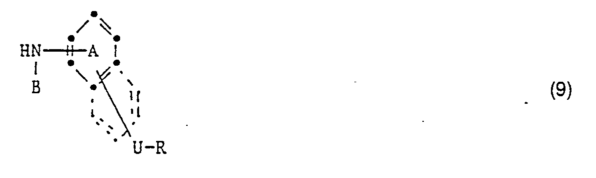 worin B Wasserstoff oder Alkyl mit 1 bis 4 Kohlenstoffatomen, das durch Carboxy, Sulfo, Cyan oder Hydroxy substituiert sein kann, ist; und der benzol- bzw. Naphthalinrest A weitere Substituenten enthalten kann ; kondensiert.

9. Verfahren gemäss Anspruch 8, dadurch gekennzeichnet, dass man einen Farbstoff der Formel (8) mit einem Amin der Formel 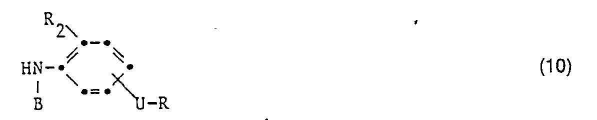 zu einem Reaktivfarbstoff der Formel (3) kondensiert.

10. Verwendung der Reaktivfarbstoffe gemäss Anspruch 1, zum Färben oder Bedrucken von cellulosehaltigen Fasermaterialien.

11. Verwendung gemäss Anspruch 10, zum Färben oder Bedrucken von Baumwolle.

12. Verwendung von Verbindungen der Formel 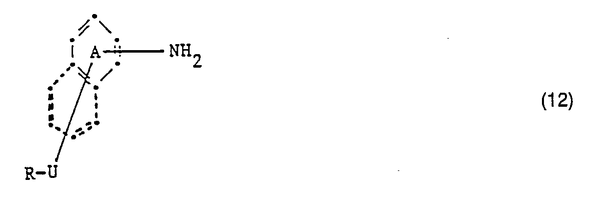 worin A, R und U die im Anspruch 1 angegebene Bedeutung haben, für die Synthese von faserreaktiven Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffen.

## Claims

1. A reactive dye of the formula 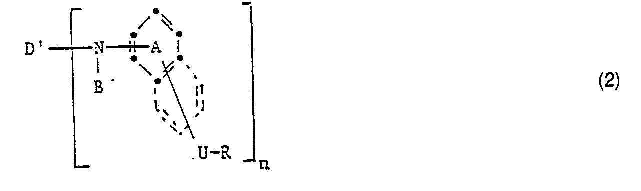 in which D' is the radical of an anthraquinone, phthalocyanine, formazan, azomethine, dioxazine, phenazine, stilbene, triphenylmethane, xanthene, thioxanthrone, nitroaryl, naphthoquinone, pyrenequinone or perylenetetracarbimide dye ; U is -CO-; R is a radical of the formula or 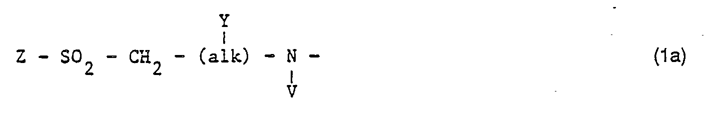 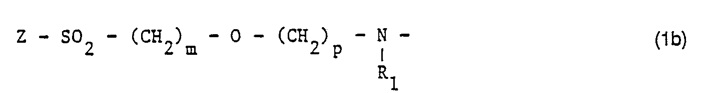 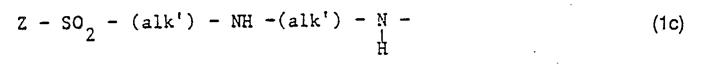 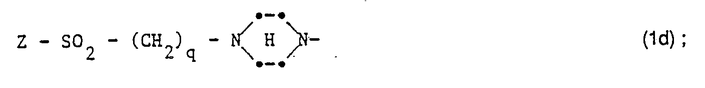
Z is sulfatoethyl, ß-thiosulfatoethyl, β-phosphatoethyl, β-acetoxyethyl, ß-halogenoethyl or vinyl ; alk is a polymethylene radical having 1 to 6 C atoms or its branched isomers ; Y is hydrogen, chlorine, bromine, fluorine, hydroxyl, sulfato, acyloxy having 1 to 4 C atoms, cyano, carboxyl, alkoxycarbonyl having 1 t_{Q} 5 C atoms, carbamoyl or a radical ―SO₂―Z in which Z is as defined above ;
V is hydrogen or an alkyl radical having 1 to 4 C atoms which can be substituted by carboxyl, sulfo, carbamoyl, N-methyl-, N-ethyl-, N,N-dimethyl-, and N,N-diethylcarbamoyl, cyano, acetyl, propionyl, butyryl, methoxycarbonyl, ethoxycarbonyl, propyloxycarbonyl, sulfamoyl, N-methyl-, N-ethyl-, N,N-dimethyl- and N,N-diethylsulfamoyl, methylsulfonyl, ethylsulfonyl and propylsulfonyl, alkoxy groups having 1 or 2 C atoms, halogen or hydroxyl ; or a radical 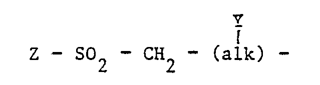 in which Z, alk and Y are as defined above ; R₁ is hydrogen or C₁₋₆alkyl ; alk', independently of each other, are polymethylene radicals having 2 to 6 C atoms or their branched isomers ; n is 1 to 4, m is 1 to 6, p is 1 to 6 and q is 1 to 6 and B is hydrogen or alkyl having 1 to 4 carbon atoms which can be substituted by carboxyl, sulfo, cyano or hydroxyl ; and the benzene or naphthalene radical A can contain further substituents.

2. A reactive dye according to claim 1, of the formula 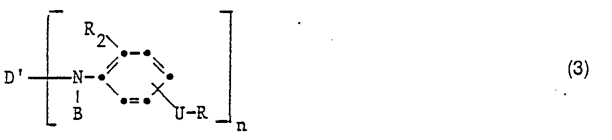 in which R₂ is hydrogen, C₁₋₄alkyl, C₁₋₄alkoxy, halogen, hydroxyl, carboxyl or sulfo ; and D', B, U, R and n are as defined in claim 1.

3. A reactive dye according to claim 2, in which D' is the radical of an anthraquinone dye.

4. A reactive dye according to claim 2, in which D' is the radical of a phthalocyanine dye.

5. A reactive dye according to claim 3, in which D' is the radical of an anthraquinone dye of the formula 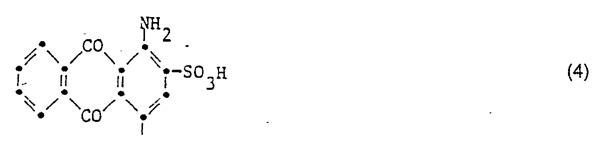 where the anthraquinone nucleus can be substituted by a further sulfo group.

6. A reactive dye according to claim 4, in which D' is the radical of a phthalocyanine dye of the formula 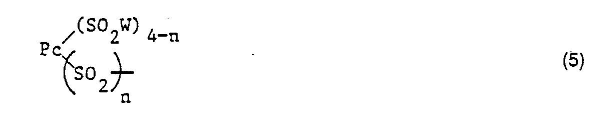
Pc is the radical of a copper or nickel phthalocyanine ; W is -OH and/or -NR₃R₄; R₃ and R₄, independently of each other, are hydrogen or alkyl having 1 to 4 carbon atoms which can be substituted by hydroxyl, alkoxy, hydroxyalkoxy, sulfo, sulfato or sulfatoalkoxy, or in which -NR₃R₄ is a morpholino radical ; and n is as defined in claim 4.

7. A reactive dye according to claim 1, in which Z is a ß-sulfatoethyl, ß-chloroethyl or vinyl group.

8. A process for preparing reactive dyes according to claim 1, which comprises condensing a dye of the formula 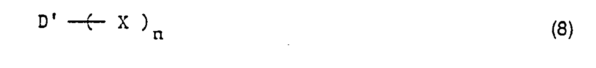 in which X is a halogen atom, with an amine of the formula 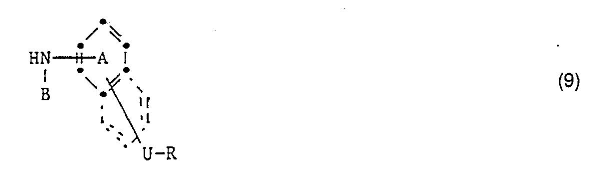 in which B is hydrogen or alkyl having 1 to 4 carbon atoms which can be substituted by carboxyl, sulfo, cyano or hydroxyl ; and the benzene or naphthalene radical A can contain further substituents.

9. A process according to claim 8, which comprises condensing a dye of the formula (8) with an amine of the formula 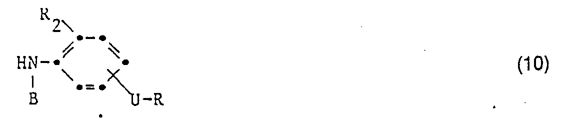 to give a reactive dye of the formula (3).

10. Use of the reactive dyes according to claim 1, for dyeing or printing cellulose-containing fiber materials.

11. Use according to claim 10, for dyeing or printing cotton.

12. Use of a compound of the formula 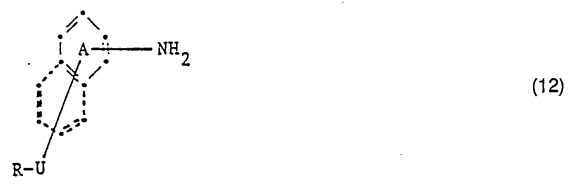 in which A, R and U are as defined in claim 1, for the synthesis of a fiber-reactive anthraquinone, phthalocyanine, formazan, azomethine, dioxazine, phenazine, stilbene, triphenylmethane, xanthene, thioxanthrone, nitroaryl, naphthoquinone, pyrenequinone or perylenetetracarbimide dye.

## Revendications

1. Colorants réactifs de formule 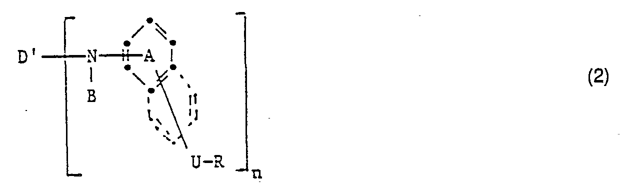 dans laquelle D' est le résidu d'un colorant anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide ;
U est un -CO ; R est un résidu de formule 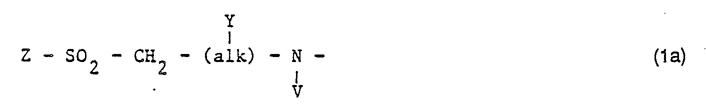 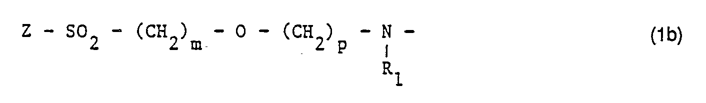 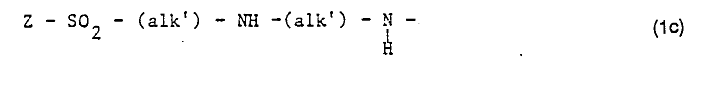 ou 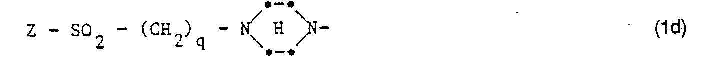
Z est le radical sulfatoéthyle, ß-thiosulfatoéthyle, ß-phosphato-éthyle, β-acétoxyéthyle, ß-halogénoéthyle ou vinyle ; alk est un radical polyméthylène ayant de 1 à 6 atomes de carbone ou ses isomères ramifiés ; Y est un hydrogène ou le radical chloro, bromo, fluoro, hydroxy, sulfato, un radical acyloxy ayant de 1 à 4 atomes de carbone, le radical cyano, carboxy, un radical alcoxycarbonyle ayant de 1 à 5 atomes de carbone, le radical carbamoyle, ou un radical ―SO₂―Z, où Z a les significations données ci-dessus ;
V est un hydrogène ou un radical alkyle ayant dé 1 à 4 atomes de carbone, pouvant être substitué par un ou plusieurs des radicaux suivants : carboxy, sulfo, carbamoyle, N-méthyl-, N-éthyl-, N,N-diméthyl- et N,N-diéthylcarbamoyle, cyano, acétyle, propionyle, butyryle, méthoxycarbonyle, éthoxycarbonyle, propy- loxycarbonyle, sulfamoyle, N-méthyl-, N-éthyl-, N,N-diméthyl- et N,N-diéthylsulfamoyle, méthylsulfonyle, éthylsulfonyle et propylsulfonyle, groupes alcoxy ayant 1 ou 2 atomes de carbone, halogéno ou hydroxy ; ou un résidu 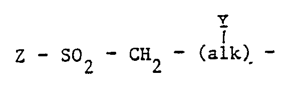 dans lequel Z, alk et Y ont les significations données ci-dessus ; R₁ est un hydrogène ou un radical alkyle en C₁₋₆; les radicaux alk', indépendamment l'un de l'autre, sont des radicaux polyméthylènes ayant de 2 à 6 atomes de carbone ou leurs isomères ramifiés ; n = 1 à 4, m = 1 à 6, p = 1 à 6 et q 1 à 6 ; et B est un hydrogène ou un radical alkyle ayant de 1 à 4 atomes de carbone, et pouvant être substitué par un ou plusieurs radicaux carboxy, sulfo, cyano ou hydroxy ; et le résidu benzénique ou naphtalénique A peut porter des substituants supplémentaires.

2. Colorants réactifs selon la revendication 1, ayant la formule suivante : 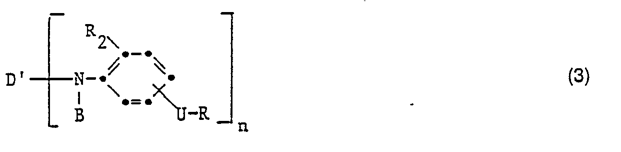 dans laquelle R₂ est un hydrogène, un radical alkyle en C₁₋₄, alcoxy en C₁₋₄, halogéno, hydroxy, carboxy ou sulfo ; et D', B, U, R et N ont les significations données dans la revendication 1.

3. Colorants réactifs selon la revendication 2, dans lesquels D' est le résidu d'un colorant anthraquinone.

4. Colorants réactifs selon la. revendication 2, dans lesquels D' est le résidu d'un colorant phtalocyanine.

5. Colorants réactifs selon la revendication 3, dans lesquels D' est le résidu d'un colorant anthraquinone ayant la formule suivante : 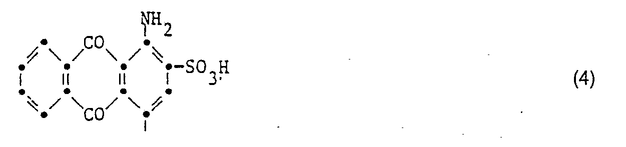 dans laquelle le noyau anthraquinone peut être substitué par un groupe sulfo supplémentaire.

6. Colorants réactifs selon la revendication 4, dans lesquels D' est le résidu d'un colorant phtalocyanine ayant la formule suivante : 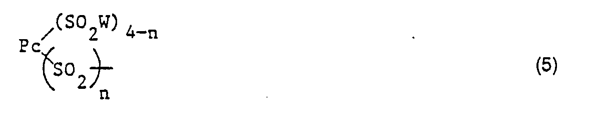
Pc est le résidu d'une phtalocyanine de cuivre ou de nickel ; W est -OH et/ou ―NR₃R₄ ; R₃ et R₄, indépendamment l'un de l'autre, sont chacun un hydrogène ou un radical alkyle ayant de 1 à 4 atomes de carbone et pouvant porter les substituants hydroxy, alcoxy, hydroxyalcoxy, sulfo, sulfato ou sulfatoalcoxy, ou encore -NR₃R₄ forme un radical morpholino ; et n a les significations s'appliquant à la revendication 4.

7. Colorants réactifs selon la revendication 1, dans lesquels Z est le groupe β-sulfatoéthyle, β-chloroéthyle ou vinyle.

8. Procédé de préparation de colorants réactifs selon la revendication 1, caractérisé en ce qu'on condense un colorant ayant la formule suivante : 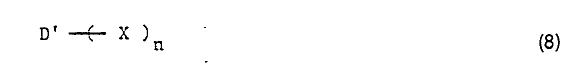 dans laquelle X est un atome d'halogène, avec une amine ayant la formule suivante : 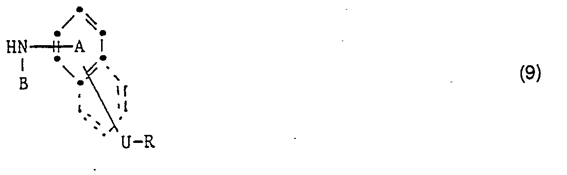 dans laquelle B est un hydrogène ou un radical alkyle ayant de 1 à 4 atomes de carbone et pouvant porter les substituants carboxy, sulfo, cyano ou hydroxy ; et le résidu benzénique ou naphtalénique A peut contenir des substituants supplémentaires.

9. Procédé selon la revendication 8, caractérisé en ce qu'on condense un colorant de formule (8), caractérisé en ce qu'on condense un colorant de formule (8) avec une amine ayant la formule suivante : 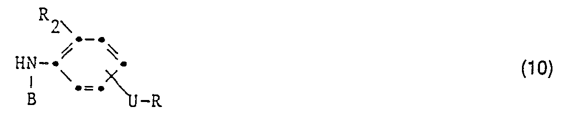 pour obtenir un colorant réactif de formule (3).

10. Utilisation des colorants réactifs selon la revendication 1,. pour la teinture ou l'impression de matières fibreuses cellulosiques.

11. Utilisation selon la revendication 10 pour la teinture ou l'impression du coton.

12. Utilisation de composés ayant la formule suivante : 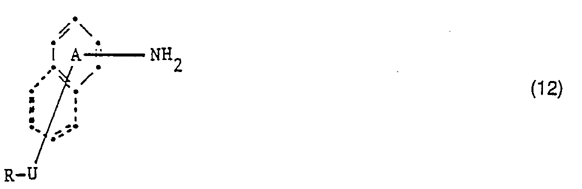 dans laquelle A, R et U ont les significations données dans la revendication 1, pour la synthèse de colorants réactifs sur les fibres anthraquinones, phtalocyanines, formazans, azométhines, dioxazines, phénazines, stilbènes, triphénylméthanes, xanthènes, thioxanthones, nitroaryles, naphtoquinones, pyrè- nequinones ou pérylènetétracarbimides.
